(19)

**Europäisches Patentamt**
**European Patent Office**
**Office européen des brevets**

(11) **EP 4 388 864 A1**

(12) **EUROPEAN PATENT APPLICATION**

(43) Date of publication:
**26.06.2024 Bulletin 2024/26**

(21) Application number: **23218865.6**

(22) Date of filing: **20.12.2023**

(51) International Patent Classification (IPC):
*A01F 15/07* (2006.01)    *A01F 15/08* (2006.01)
*F16H 7/08* (2006.01)    *F16H 7/12* (2006.01)

(52) Cooperative Patent Classification (CPC):
**F16H 7/08; A01F 15/07; A01F 15/0825;**
**A01F 15/085;** A01F 2015/0735; A01F 2015/0775;
F16H 2007/0806; F16H 2007/087;
F16H 2007/0893; F16H 2007/0897

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **20.12.2022 IE S20220207**

(71) Applicants:
• **McHale Engineering Unlimited Company**
 **Ballinrobe, County Mayo (IE)**
• **National University of Ireland, Galway**
 **H91 TK33 Galway (IE)**

(72) Inventors:
• **McHale, Padraic, Christopher**
 **Tumneenane, Clonbur, County Galway (IE)**
• **McHale, Martin, William**
 **Kilmaine Village, Kilmaine, County Mayo (IE)**

• **McHale, Paul, Gerard**
 **13 Riverside, Woodquay, Galway (IE)**
• **Biggins, John, Patrick**
 **30 Hillcrest, Claremorris, County Mayo (IE)**
• **Warren, John, Alexander**
 **Coolylaughnan, Hollymount, County Mayo (IE)**
• **Shanahan, Conor, Paul**
 **Claggan, Ballycroy, Westport, County Mayo (IE)**
• **Byrne, Dallan**
 **University Road, Galway,, H91 TK33 (IE)**
• **Crotty, Tomás**
 **University Road, Galway,, H91 TK33 (IE)**
• **Glavin, Martin**
 **University Road, Galway,, H91 TK33 (IE)**
• **Jones, Edward**
 **University Road, Galway,, H91 TK33 (IE)**

(74) Representative: **Gorman, Francis Fergus**
 **F. F. Gorman & Co.**
 **15 Clanwilliam Square**
 **Dublin 2 (IE)**

(54) **A BALER AND A METHOD FOR DETERMINING THE POWER DRAWN BY A BALE CHAMBER OF A BALER AND A METHOD FOR DETERMINING THE QUANTITY OF MATERIAL IN A BALE CHAMBER AND FOR DETERMINING THE OPTIMUM GROUND SPEED FOR THE BALER**

(57)    A fixed chamber baler (2) comprises a bale chamber (10) defined by bale rotating rollers (17) driven by a drive transmission system (49) comprising a driven sprocket (50) driving first and second driven sprockets (52, 54) by a main drive chain (53). A tensioning sprocket (80) carried on a pivotally mounted carrier arm (83) is urged by a tension spring (95) into engagement with a slack leg (84) of a main drive chain (53). An angle sensor (105) coupled by a link member (107) to the carrier arm (83) monitors the angular displacement of the carrier arm (83) from a datum position and produces a signal indicative of the angular displacement of the carrier arm (83) from the datum position. The microcontroller is programmed to determine the power being drawn by the bale rotating rollers (17) to rotate the material in the bale chamber (10) from the degree of elastic stretch in the main drive chain (53) from an equation $y = m_1 x + c_1$ where y is the value of the power and x is the value of the signal read from the angle sensor (105) and $m_1$ and $c_1$ are constants determined empirically. The current quantity of material in the bale chamber (10) is determined from a linear equation, a power law equation or a polynomial equation. The optimum ground speed of the baler is determined by multiplying the current ground speed by the optimum rate at which crop material should be delivered into the bale chamber (10), and dividing the product by the current rate at which the crop material is being delivered into the bale chamber (10).

**(Cont. next page)**

FIG 6

**Description**

The present invention relates to a baler, and in particular, though not limited to a baler for producing a cylindrical bale of material, for example, crop material, and the invention also relates to a method for determining the power being drawn by a bale chamber as a bale is being rotated, pressed and formed therein. Additionally, the invention relates to a method for determining the quantity of material in a bale chamber of a baler and for determining the optimum ground speed for a baler.

Balers for forming cylindrical bales of material, for example, crop material, such as silage, hay, straw and the like as well as animal bedding are known. Such cylindrical bales, are commonly referred to as round or large round bales, and typically, are of a diameter in the range of 500mm to 2,000mm and of axial length commonly in the range of 1,100mm to 1,300mm. More typically, the diameter of such large round bales lies in the range of 700mm to 1,300mm, while the axial length of such large round bales more typically, lies in the range of 1,200mm to 1,250mm.

Such balers, can be broadly categorised into two broad categories, namely, roller balers commonly referred to as fixed chamber balers and belt balers. Fixed chamber balers, in general, comprise a series of parallel bale rotating rollers arranged circumferentially around and defining a bale chamber of substantially fixed diameter, within which material to be baled is rotated, pressed and formed into a bale. Belt balers, on the other hand comprise one or more belts which are carried on rollers, some of which are tensioning rollers to apply tension to the belts, and one and in some cases two of the non-tensioning rollers are driven to drive the belt or belts. The belt or belts are arranged to define a variable diameter bale chamber, which increases in diameter as the bale is being formed therein. Such balers will be well known to those skilled in the art.

During the rotating, pressing and forming of material into a bale in a bale chamber of such balers, the power required to rotate, press and form the bale increases as the bale is being formed to a maximum power, which is required as the formation of the bale in the bale chamber is nearing completion. Additionally, the maximum power required to form a bale increases as the density to which the bale is to be formed increases. Thus, balers which are operated to form bales of relatively low density can operate at power levels lower than balers which are operated to form bales of a higher density. Accordingly, it is important to know the power level at which a baler is operated during the periods when such balers are operating, since the wear and tear on components of balers and the working life of such components, in general, is determined by the power levels at which the balers are operated. Needless to say, the components, in particular, power transmission components and pressing components for pressing the material in the bale chamber, will have a shorter working life in balers that are operated at relatively high power levels, than such components in balers which are operated at lower power levels. Thus, in order to plan servicing and maintenance of such balers, it is important to have a record of the power levels at which such balers are operated, and the time periods, and the number thereof during which such balers are operated at such power levels.

While instruments for determining power being drawn from a power source are available, such instruments tend to be relatively expensive. For example, one such instrument for determining power being transmitted from a power source is of the type which monitors torque being transmitted through a transmission shaft from the power source. However, such torque measuring and monitoring instruments are relatively expensive, and therefore, due to cost are unsuitable for monitoring and determining torque being drawn by a bale chamber of a baler.

Additionally, it is desirable that an operator of a baler be informed of the quantity of material in the bale chamber. While various systems, methods and devices are known for determining the quantity of material in a bale chamber of a baler, such known methods and devices suffer from various disadvantages, in that in some cases, the accuracy with which the quantity of material in the bale chamber is determined is poor, and in many cases such methods and devices are only capable of determining the quantity of material in the bale chamber in the latter part of the formation of the bale, in other words, as the formation of the bale in the bale chamber is nearing completion. In other cases, the methods and devices for determining the quantity of material in the bale chamber are cumbersome, expensive and prone to being damaged, as well as producing inaccurate information.

It is also desirable that an operator of a baler should be provided with information regarding the optimum ground speed at which the baler should be travelling in order to optimise between the rate at which crop material is being delivered into the bale chamber and the power being drawn by the bale chamber.

The present invention is directed towards providing a method and a baler for addressing at least one of the above matters.

Throughout this specification, the term "bale forming cycle" is used to mean the period during which a bale of material is being formed in a pressing means, such as a bale chamber of a baler from the commencement of feeding of the material into the bale chamber until the formation of the bale in the bale chamber has been completed and the bale is ready for circumferential wrapping in the pressing means.

According to the invention there is provided a method for determining a value of power being drawn by a pressing means of a baler, the pressing means being adapted to rotate, press and form material into a round bale, wherein the method comprises:

monitoring a value of a characteristic indicative of tension in an endless drive transmission element through which power is being drawn by the pressing means to rotate the material therein, and,

determining the value of the power being drawn by the pressing means to rotate the material therein as a function of the value of the monitored characteristic indicative of the tension in the endless drive transmission element.

In one embodiment of the invention the current value of the power being drawn by the pressing means to rotate the material therein is determined as a function of the current value of the monitored characteristic indicative of the tension in the endless drive transmission element.

In one embodiment of the invention the monitoring of the value of the characteristic indicative of the tension in the endless drive transmission element through which power is being drawn by the pressing means to rotate the material therein comprises monitoring a value indicative of the elastic stretch in the endless drive transmission element.

Preferably, the characteristic indicative of the tension in the endless drive transmission element is monitored by monitoring a value indicative of displacement of a tensioning means from a datum position thereof, the tensioning means being engageable with the endless drive transmission element for tensioning thereof.

In one embodiment of the invention the monitoring of the value of the characteristic indicative of the tension in the endless drive transmission element through which power is being drawn by the pressing means to rotate the material therein comprises monitoring a value indicative of the elastic stretch in the endless drive transmission element.

In another embodiment of the invention the value indicative of the elastic stretch in the endless drive transmission element is monitored in a slack leg of the endless drive transmission element.

In another embodiment of the invention the value indicative of the elastic stretch in the endless drive transmission element is monitored by monitoring a value of displacement of the tensioning means from a datum position.

In another embodiment of the invention the tensioning means is engageable with the endless drive transmission element for tensioning thereof, and preferably, for tensioning the slack leg of the endless drive transmission element.

In one embodiment of the invention the tensioning means is rollably engageable with the endless drive transmission element.

In an alternative embodiment of the invention the tensioning means is slideably engageable with the endless drive transmission element.

Preferably, the tensioning means is pivotally mounted about a pivot axis, and the characteristic indicative of the tension in the endless drive transmission element is monitored by monitoring a value of the angular displacement of the tensioning means about the pivot axis from the datum position thereof.

In another embodiment of the invention the tensioning means is carried on a carrier element pivotally mounted about the pivot axis of the tensioning means, and preferably, the pivot axis of the tension means is radially spaced apart from the tensioning means.

Preferably, the value of the angular displacement of the tensioning means from the datum position is monitored by an angle displacement sensor.

In another embodiment of the invention the datum position of the tensioning means is determined as the position of the tensioning means when the pressing means is operating in a no-load state.

In one embodiment of the invention the tensioning means comprises an engagement element engageable with the endless drive transmission element.

In another embodiment of the invention the engagement element is rollably engageable with the endless drive transmission element. In an alternative embodiment of the invention the engagement element is slideably engageable with the endless drive transmission element.

In one embodiment of the invention the endless drive transmission element is configured to transmit power from a rotatably mounted driving element to a rotatably mounted driven element.

Preferably, the driven element is configured to transmit power to the pressing means, and advantageously, the driving element is configured to receive power from a power source.

In one embodiment of the invention the endless drive transmission element comprises an endless drive transmission chain, and preferably, the engagement element comprises a sprocket

In an alternative embodiment of the invention the endless drive transmission element comprises an endless drive transmission belt, and preferably, the engagement element comprises a pulley wheel.

In one embodiment of the invention the value of the power being drawn by the pressing means to rotate the material therein is determined from an equation representing the relationship between the value of power being drawn by the pressing means to rotate the material therein, and the value of the monitored characteristic indicative of the value of the tension in the endless drive transmission element.

In another embodiment of the invention the equation of the relationship between the value of the power being drawn by the pressing means to rotate the material therein, and the value of the monitored characteristic indicative of the value of the tension in the endless drive transmission element comprises a substantially linear relationship.

In another embodiment of the invention the linear relationship between the value of the power being drawn by the pressing means to rotate the material therein and the value of the monitored characteristic indicative of the value of the tension in the endless drive transmission element comprises an equation represented as

$$y = m_1 x + c_1 \quad\text{................................................ (1)}$$

where y represents the value of the power being drawn by the pressing means to rotate the material therein,

$x$ represents the value of the monitored characteristic indicative of the value of the tension in the endless drive transmission element, and

$m_1$ and $c_1$ are constants determined empirically.

In one embodiment of the invention the method further comprises comparing either the determined value of the power being drawn by the pressing means to rotate the material therein or the value of the monitored characteristic indicative of the tension in the endless drive transmission element with a corresponding first threshold value, and if the determined value of the power, or the value of the monitored characteristic exceeds the corresponding first threshold value, a first time period is timed from the time the corresponding first threshold value is exceeded until the value of the determined power or the value of the monitored characteristic ceases to exceed the corresponding first threshold value.

In one embodiment of the invention the time value of each first time period is time and date stamped and stored in memory, and preferably, the time values of the first time periods are cumulatively summed and stored in memory.

Preferably, the cumulative value of the summed time values of the first timed periods is determined as a proportion of the total operating time of the pressing means.

In another embodiment of the invention the first threshold value comprises either a power value above which the power being drawn by the pressing means to rotate the material therein should only operate for a short time period, for example, during the pressing of a bale of relatively high density during the final stage of the formation of the bale, or a value of the characteristic indicative of the tension in the endless drive transmission element, above which the pressing means should only operate for short time periods, such as during the pressing of a bale of relatively high density during the final stage of formation of the bale.

In another embodiment of the invention each time the determined value of the power being drawn by the pressing means to rotate the material therein or the value of the monitored characteristic indicative of the tension in the endless drive transmission element is determined as exceeding the first threshold value, the determined value of the power or the value of the monitored characteristic is compared with a corresponding second threshold value, each second threshold value being greater than the corresponding first threshold value, and if the determined value of the power or the value of the monitored characteristic exceeds the corresponding second threshold value, a second time period is timed from the commencement of the determined value of the power or the value of the monitored characteristic exceeding the corresponding second threshold value until the determined value of the power or the value of the monitored characteristic ceases to exceed the second corresponding threshold value.

In one embodiment of the invention the time value of each second time period is time and date stamped and stored in memory, and preferably, the time values of the second time periods are cumulatively summed and stored in memory.

In another embodiment of the invention the cumulative value of the summed time values of the second time periods is determined as a proportion of the total operating time of the pressing means.

In one embodiment of the invention the second threshold value comprises either a power value, above which the power being drawn by the pressing means to rotate the material therein should only be exceeded for short time periods shorter than the time periods during which the power being drawn by the pressing means to rotate the material therein may exceed the first threshold value, or a value of the characteristic indicative of the tension in the endless drive transmission element above which the pressing means should operate for short time periods shorter than the time periods during which the value of the characteristic indicative of the tension in the endless drive transmission element may exceed the first threshold value.

In another embodiment of the invention each time the determined value of the power being drawn by the pressing means to rotate the material therein or the value of the monitored characteristic indicative of the tension in the endless drive transmission element is determined as exceeding the corresponding second threshold value, the determined value of the power or the value of the monitored characteristic is compared with a corresponding third threshold value, the third threshold value being greater than the corresponding second threshold value and if the determined value of the power or the value of the monitored characteristic exceeds the corresponding third threshold value, a third time period is timed from the commencement of the determined value of the power or the value of the monitored characteristic exceeding the corresponding third threshold value until the determined value of the power or the value of the monitored characteristic ceases to exceed the corresponding third threshold value.

In one embodiment of the invention the time value of each third time period is time and date stamped and stored in memory, and preferably, the time values of the third time periods are cumulatively summed and stored in memory.

In another embodiment of the invention the cumulative value of the summed time values of the third time periods is determined as a proportion of the total operating time of the pressing means.

In another embodiment of the invention the third threshold value comprises either a power value above which the power being drawn by the pressing means to rotate the material therein should only be exceeded for short time periods shorter than the time periods during which the power being drawn by the pressing means to rotate the material therein may exceed the second threshold value, or a value of the characteristic indicative of the tension in the endless drive transmission element above which the pressing means should only operate for short time periods shorter than the time periods during which the value of the characteristic indicative of the tension in the endless drive transmission element may exceed the second threshold value.

In one embodiment of the invention the third threshold value comprises either a power value just less than the maximum power at which a safety cut-out clutch responsive to power being drawn by the pressing means to rotate the material therein is set to cut-out, or a value of the characteristic indicative of the tension in the endless drive transmission element just less than a maximum value thereof corresponding to the maximum power value at which the safety cut-out clutch responsive to power being drawn by the pressing means to rotate the material therein is set to cut-out.

In another embodiment of the invention the method further comprises producing a signal indicative of the power being drawn by the pressing means to rotate the material therein, and preferably, the signal indicative of the power being drawn by the pressing means to rotate the material therein is adapted for conversion to a human sensory perceptible signal.

In one embodiment of the invention the signal indicative of the power being drawn by the pressing means comprises a signal adapted for applying to a visual display screen adapted to in turn display the power being drawn by the pressing means.

Advantageously, the signal indicative of the power being drawn by the pressing means to rotate the material therein comprises a signal indicative of the current power being drawn by the pressing means to rotate the material therein.

In another embodiment of the invention the capacity of the pressing means is selectable.

The invention also provides a method for determining the quantity of material in a pressing means of a baler, the pressing means being adapted to rotate, press and form the material into a round bale, wherein the method comprises:

determining the value of the power being drawn by the pressing means to rotate the material therein according to the invention, or the value of the characteristic indicative of tension in an endless drive transmission element through which power is being drawn by the pressing means to rotate the material therein, and

determining the quantity of material in the pressing means as a function of the determined value of the power being drawn by the pressing means to rotate the material therein, or the determined value of the characteristic indicative of the tension in the endless drive transmission element through which power is being drawn by the pressing means to rotate the material therein.

Additionally, the invention provides a method for determining the quantity of material in a pressing means of a baler, the pressing means being adapted to rotate, press and form the material into a round bale, the method comprising determining the quantity of the material in the pressing means as a function of the power being drawn by the pressing means to rotate the material therein.

Further, the invention provides a method for determining the quantity of material in a pressing means of a baler, the pressing means being adapted to rotate, press and form the material into a round bale, the method comprising determining the quantity of material in the pressing means as a function of a characteristic indicative of tension in an endless drive transmission element through which power is being drawn by the pressing means to rotate the material therein.

In another embodiment of the invention the method comprises monitoring the characteristic indicative of the tension in the endless drive transmission element through which power is being drawn by the pressing means to rotate the material therein.

In one embodiment of the invention the monitoring of the value of the characteristic indicative of the tension in the endless drive transmission element through which power is being drawn by the pressing means to rotate the material therein comprises monitoring a value indicative of the elastic stretch in the endless drive transmission element.

In another embodiment of the invention the value indicative of the elastic stretch in the endless drive transmission element is monitored by monitoring a value of displacement of the tensioning means from a datum position.

In one embodiment of the invention the method comprises:

determining a value of the power being drawn by the pressing means to rotate the material therein, or determining a value of a characteristic indicative of tension in an endless drive transmission element through which power is being drawn by the pressing means to rotate the material therein, and determining the quantity of material in the pressing means as a function of eitherthe determined value of the power being drawn by the pressing means, or as a function of the determined value of the characteristic indicative of the tension in the endless drive transmission element.

In another embodiment of the invention the quantity of material currently in the pressing means is determined either as a function of the current value of the power being drawn by the pressing means to rotate the material therein, or as a function of the current value of the characteristic indicative of the tension in the endless drive transmission element.

In one embodiment of the invention the quantity of material in the pressing means of the baler is determined from an equation representing the relationship between the quantity of material in the pressing means, and either the value of the power being drawn by the pressing means to rotate the material therein, or the value of the characteristic indicative of the tension in the endless drive transmission element through which power is being drawn by the pressing means to rotate the material therein.

In one embodiment of the invention the relationship between the quantity of material in the pressing means and either the value of the power being drawn by the pressing means to rotate the material therein, orthe value of the characteristic indicative of the tension in the endless drive transmission element comprises a linear relationship.

In another embodiment of the invention the linear relationship between the quantity of material in the pressing means and either the value of the power being drawn by the pressing means to rotate the material therein, orthe value of the characteristic indicative of the tension in the endless drive transmission element may be represented by the equation

$$y = m_2 x + c_2 \quad\text{.......................................................(2)}$$

where y represents the quantity of material in the pressing means,

x represents either the value of the power being drawn by the pressing means to rotate the material therein, orthe value of the characteristic indicative of the tension in the endless drive transmission element, and

$m_2$ and $c_2$ are constants determined empirically.

In one embodiment of the invention the relationship between the quantity of material in the pressing means and either the value of the power being drawn by the pressing means to rotate the material therein, orthe value of the characteristic indicative of the tension in the endless drive transmission element comprises the linear relationship when the material to be baled comprises a crop material of a moisture content in the range of approximately 40% to approximately 60%, and may be represented by the linear equation (2).

In another embodiment of the invention the relationship between the quantity of material in the pressing means and either the value of the power being drawn by the pressing means to rotate the material therein, or the value of the characteristic indicative of the tension in the endless drive transmission element comprises the linear relationship when the crop material comprises haylage, and may be represented by the linear equation (2).

In another embodiment of the invention the relationship between the quantity of material in the pressing means and either the value of the power being drawn by the pressing means to rotate the material therein, or the value of the characteristic indicative of the tension in the endless drive transmission element comprises a non-linear relationship, and in one embodiment of the invention the non-linear relationship may be represented by a power law equation, and in one embodiment of the invention may be represented by a power law equation in the form

$$y = c_3^x \quad\text{.......................................................(3)}$$

where y represents the quantity of material in the pressing means,

x represents the value of power being drawn by the pressing means to rotate the material therein, or the value of the characteristic indicative of the tension in the endless drive transmission element, and

$c_3$ is a constant determined empirically.

In one embodiment of the invention the non-linear relationship between the quantity of material in the pressing means and either the value of the power being drawn by the pressing means to rotate the material therein, or the value of the characteristic indicative of the tension in the endless drive transmission element may be represented by a power law equation when the material to be baled comprises crop material of a moisture content of approximately 60% and greater.

In another embodiment of the invention the non-linear relationship between the quantity of material in the pressing means and either the value of the power being drawn by the pressing means to rotate the material therein, or the value of the characteristic indicative of the tension in the endless drive transmission element, may be represented by a power law equation when the crop material comprises grass silage.

In a further embodiment of the invention the non-linear relationship between the quantity of material in the pressing means and either the value of the power being drawn by the pressing means to rotate the material therein, or the value of the characteristic indicative of the tension in the endless drive transmission element may be represented by a polynomial equation, and preferably, a polynomial equation in the form of

$$y = ax^3 \pm bx^2 \pm cx \pm d \quad \text{...............................} \quad (4)$$

where y represents the quantity of material in the pressing means,

x represents either the value of the power being drawn by the pressing means to rotate the material therein, or the value of the characteristic indicative of the tension in the endless drive transmission element, and

a, b, c and d are constants determined empirically.

In one embodiment of the invention the non-linear relationship between the quantity of material in the pressing means and either the value of the power being drawn by the pressing means to rotate the material therein, or the value of the characteristic indicative of the tension in the endless drive transmission element may be represented by a polynomial equation when the material to be baled comprises a crop material of a moisture content of approximately 20% or less.

In a further embodiment of the invention the non-linear relationship between the quantity of material in the pressing means and either the value of the power being drawn by the pressing means to rotate the material therein, or the value of the characteristic indicative of the tension in the endless drive transmission element may be represented by a polynomial equation when the crop material comprises straw, and preferably, wheat straw.

In another embodiment of the invention the method further comprises producing a signal indicative of the quantity of material in the pressing means, and advantageously, the signal indicative of the quantity of material in the pressing means is adapted for conversion to a human sensory perceptible signal.

In one embodiment of the invention the signal indicative of the quantity of material in the pressing means is adapted for applying to a visual display screen, for in turn displaying the quantity of material in the pressing means.

Preferably, the signal indicative of the quantity of material in the pressing means comprises a signal indicative of the current quantity of material in the pressing means.

Further the invention provides a method for determining the optimum ground speed of a baler comprising a pressing means adapted to rotate, press and form material therein into a round bale, wherein the method comprises:

determining the value of power being drawn by the pressing means to rotate the material therein according to the invention or a value of a characteristic indicative of tension in an endless drive transmission element through which power is being drawn by the pressing means to rotate the material therein,
determining the current rate at which the value of the power is increasing per unit time or the current rate at which the characteristic indicative of the tension in the endless drive transmission element is increasing per unit time,
determining the current ground speed of the baler, and
determining the optimum ground speed of the baler as a function of the optimum rate of increase in the value of the power or in the value of the characteristic indicative of tension in the endless drive transmission element per unit time, the current increase in the value of power or in the value of the characteristic indicative of the tension in the endless drive transmission element per unit time, and the current ground speed of the baler.

Additionally, the invention provides a method for determining the optimum ground speed of a baler comprising a pressing means adapted to rotate, press and form material therein into a round bale, wherein the method comprises:

determining the current rate at which the material is being delivered into the pressing means,
determining the current ground speed of the baler, and
determining the optimum ground speed of the baler as a function of the optimum rate at which the material should be delivered into the pressing means, the current rate at which the material is being delivered into the crop material, and the current ground speed of the baler.

The invention also provides a method for determining the optimum ground speed of a baler, the method comprising determining the optimum ground speed of the baler as a function of the current ground speed of the baler and either the current rate at which the material is being delivered into the pressing means, the current rate at which the power being drawn by the pressing means to rotate the material therein is increasing or the current rate at which a value of a characteristic indicative of tension in an endless drive transmission element through which power is being drawn by the pressing means to rotate the material therein is increasing.

Preferably, the optimum ground speed of the baler is determined as a function of the current ground speed of the baler and either the optimum rate at which the material should be delivered into the pressing means and the current rate at which the material is being delivered into the pressing means, or the optimum rate at which the power drawn by the pressing means to rotate the material therein should increase and the current rate at which the power being drawn by the pressing means to rotate the material therein is increasing, or the optimum rate at which the value of the characteristic indicative of the tension in the endless drive transmission element should increase and the current rate at which the value of the characteristic indicative of the tension in the endless drive transmission element is increasing.

In one embodiment of the invention the optimum ground speed of the baler is determined as a function of the current ground speed of the baler multiplied by either the ratio of the optimum rate at which material should be delivered into the pressing means to the current rate at which the material is being delivered into the pressing means, or the ratio of the optimum rate at which the power drawn by the pressing means to rotate the material therein should increase to the current rate at which the power being drawn by the pressing means to rotate the material therein is increasing, or the ratio of the optimum rate at which the value of the characteristic indicative of the tension in the endless drive transmission element should increase to the current rate at which the value of the characteristic indicative of the tension in the endless drive transmission element is increasing.

In one embodiment of the invention the method comprises:

determining the current speed of the baler, and determining either the current rate at which the material is being delivered into the pressing means, or the current rate at which the power being drawn by the pressing means to rotate the material therein is increasing, or the current rate at which the value of the characteristic indicative of the tension in the endless drive transmission element through which power is being drawn by the pressing means to rotate the material therein is increasing.

In one embodiment of the invention the optimum rate at which material should be delivered into the pressing means is determined as a rate to optimise between the rate at which material is being delivered into the pressing means and the power being drawn by the pressing means to rotate the material therein.

In another embodiment of the invention the optimum rate at which the power being drawn by the pressing means to rotate the material therein should increase is determined as a rate to optimise between the rate at which the power being drawn by the pressing means to rotate the material therein increases and the power being drawn by the pressing means to rotate the material therein.

In another embodiment of the invention the optimum rate at which the value of the characteristic indicative of the tension in the endless drive transmission element should increase is determined as a rate to optimise between the rate at which the value of the characteristic indicative of the tension in the endless drive transmission element is increasing and the power being drawn by the pressing means to rotate the material therein.

In another embodiment of the invention the optimum rate at which the material being delivered into the pressing means is selectable.

In another embodiment of the invention the optimum rate at which the power being drawn by the pressing means to rotate the material therein should increase is selectable.

In another embodiment of the invention the optimum rate at which the value of the characteristic indicative of the tension in the endless drive transmission element should increase is selectable.

In one embodiment of the invention the current rate at which the quantity of material is being delivered into the pressing means is determined as a function of the determined quantity of the material currently in the pressing means and a previously determined quantity of material in the pressing means, and the time period between the determined quantity of material currently in the pressing means and the previously determined quantity of the material in the pressing means.

In another embodiment of the invention the current rate at which the power being drawn by the pressing means to rotate the material therein is increasing is determined as a function of the current value of the power being drawn by the pressing means to rotate the material therein and a previously determined value of the power being drawn by the pressing means to rotate the material therein and the time period between the current value of the power being drawn by the pressing means to rotate the material therein and the previously determined value of the power being drawn by the pressing means to rotate the material therein.

In another embodiment of the invention the current rate at which the value of the characteristic indicative of the tension in the endless drive transmission element is increasing is determined as a function of the current value of the characteristic indicative of the tension in the endless drive transmission element and a previously determined value of the characteristic indicative of the tension in the endless drive transmission element, and the time period between the current value of the characteristic indicative of the tension in the endless drive transmission element and the previously determined value of the characteristic indicative of the tension in the endless drive transmission element.

In one embodiment of the invention at least two values of the optimum rate at which material should be delivered into the pressing means are determined, and preferably, each of the values of the optimum rate at which the material should be delivered into the pressing means is determined based on the type of material being delivered into the pressing means, and in one embodiment of the invention each value of the optimum rate at which material should be delivered into the pressing means is determined based on the moisture content of the material.

In one embodiment of the invention three values of the optimum rate at which the material should be delivered into the pressing means are determined, and preferably, one of the values thereof being based on the material being of a moisture content in the range of approximately 40% to approximately 60%, and another one of the values thereof is based on the material being of a moisture content of approximately 60% and greater, and the third value of the rate at which the material should be delivered into the pressing means is determined based on the moisture content of the material being approximately 20% or less.

In one embodiment of the invention the optimum rate at which material should be delivered into the pressing means is determined for crop material of a moisture content in the range of 40% to 60%, and in another embodiment of the invention the optimum rate at which the material should be delivered into the pressing means is determined for crop material being of a moisture content of approximately 60% or greater, and in a further embodiment of the invention the optimum rate at which the material should be delivered into the pressing means is determined for crop material of a moisture content of 20% or less.

In another embodiment of the invention at least two values of the optimum rate at which the crop material should be delivered into the pressing means are determined based on the time period required for each bale forming cycle, and preferably, one of the optimum rates at which the material should be delivered into the pressing means is determined based on a short operating time mode during which the time period required for each bale forming cycle comprises a relatively short time period, and in another embodiment of the invention one of the optimum rates at which the material should be delivered into the pressing means is determined based on a long operating time mode during which the time period required for each bale forming cycle comprises a relatively long time period, and in a further embodiment of the invention one of the optimum rates at which the material should be delivered into the pressing means is based on a normal operating time mode with the time period of each bale forming cycle comprising a normal time period.

Preferably, more than one optimum rate at which the material should be delivered into the pressing means is determined for each type of crop material.

In one embodiment of the invention the method further comprises producing a signal indicative of the determined optimum ground speed of the baler, and preferably, the signal indicative of the optimum ground speed of the baler is adapted for conversion into a human sensory perceptible signal.

In another embodiment of the invention the signal indicative of the optimum ground speed of the baler comprises a signal adapted for applying to a visual display screen on which the optimum ground speed of the baler is displayed.

In another embodiment of the invention the signal indicative of the optimum ground speed of the baler is adapted for applying to a speed controller controlling the ground speed of the baler, and preferably, the signal indicative of the optimum ground speed of the baler is adapted for applying to a speed controller of a prime mover towing the baler for controlling the ground speed of the prime mover to tow the baler at the determined optimum ground speed.

Additionally, the invention provides a baler comprising a pressing means for rotating, pressing and forming material into a round bale, an endless drive transmission element for transmitting power to the pressing means to rotate the material therein to form the bale, wherein a monitoring means is provided for monitoring a characteristic indicative of tension in the endless drive transmission element and configured to produce a signal indicative of the value of the monitored characteristic, and a signal processor programmed to read the value of the signal produced by the monitoring means indicative of the monitored characteristic and programmed to determine the power being drawn by the pressing means to rotate the material therein to form the bale as a function of the signal indicative of the value of the monitored characteristic read from the monitoring means.

In one embodiment of the invention the monitoring means is configured to monitor a characteristic of elastic stretch in the endless drive transmission element as the characteristic indicative of the tension in the endless drive transmission element.

In another embodiment of the invention a tensioning means is provided for tensioning the endless drive transmission element, and the monitoring means is configured to monitor the displacement of the tensioning means from a datum position thereof, as the tensioning means tensions the endless drive transmission element as the characteristic indicative of the tension in the endless drive transmission element.

In one embodiment of the invention the signal processor is programmed to determine the current value of the power being drawn by the pressing means to rotate the material therein as a function of the current value of the signal indicative of the monitored characteristic read from the monitoring means.

In one embodiment of the invention the monitoring means is configured to monitor a characteristic of elastic stretch in the endless drive transmission element as the characteristic indicative of the tension in the endless drive transmission element.

In another embodiment of the invention the tensioning means is provided for tensioning a slack leg of the endless drive transmission element, and the monitoring means is configured to monitor the displacement of the tensioning means from a datum position of the tensioning means, as the tensioning means tensions the slack leg of the endless drive transmission element as the characteristic indicative of the tension in the endless drive transmission element.

In another embodiment of the invention the tensioning means is pivotally mounted about a pivot mounting, and the monitoring means is configured to monitor the angular displacement of the tensioning means about the pivot mounting from the datum position as the characteristic indicative of the tension in the endless drive transmission element.

Preferably, the tensioning means is pivotally mounted about a pivot axis, and the monitoring means is configured to monitor the angular displacement of the tensioning means about the pivot axis from the datum position as the characteristic indicative of the tension in the endless drive transmission element.

In one embodiment of the invention the tensioning means is radially spaced apart from the pivot axis thereof.

Preferably, the monitoring means comprises an angular displacement sensor.

In another embodiment of the invention the datum position of the tensioning means is determined as the position of the tensioning means when the pressing means is operating in a no-load state.

In one embodiment of the invention the endless drive transmission element is configured to transmit power from a rotatably mounted driving element to a rotatably mounted driven element.

In another embodiment of the invention the driven element is configured to transmit power to the pressing means.

In another embodiment of the invention the driving element is configured to receive power from a power source.

In another embodiment of the invention the tensioning means comprises an engagement element engageable with the endless drive transmission element for tensioning thereof. Preferably, the tensioning means is mounted on a carrier arm, and advantageously, the carrier arm is pivotal about the pivot axis about which the tensioning means is pivotal from the datum position.

In one embodiment of the invention the tensioning means rollably engages the endless drive transmission element. Alternatively, the tensioning means slideably engages the endless drive transmission element, and in another embodiment of the invention the tensioning means comprises a skid element slideably engageable with the endless drive transmission element.

In one embodiment of the invention the endless drive transmission element comprises an endless drive transmission chain, and preferably, the tensioning means comprises a sprocket rollably engageable with the endless drive transmission chain.

In an alternative embodiment of the invention the endless drive transmission element comprises an endless drive transmission belt, and advantageously, the tensioning means comprises a pulley rollable engageable with the endless drive transmission belt.

In one embodiment of the invention the signal processor is programmed to determine the power being drawn by the pressing means to rotate the material therein from an equation representing the relationship between the power being drawn by the pressing means to rotate the material therein and the monitored characteristic indicative of the tension in the endless drive transmission element.

In one embodiment of the invention the relationship between the power being drawn by the pressing means to rotate the material therein and the monitored characteristic indicative of the tension in the endless drive transmission element comprises a linear relationship.

In one embodiment of the invention the equation representing the relationship between the power being drawn by the pressing means to rotate the material therein and the monitored characteristic indicative of the tension in the endless drive transmission element comprises an equation in the form of

$$ y = m_1 x + c_1 \quad\text{..........................................}\quad (1) $$

where $y$ represents the power being drawn by the pressing means to rotate the material therein,

$x$ represents the monitored characteristic indicative of the tension in the endless drive transmission element, and

$m_1$ and $c_1$ are constants determined empirically.

In another embodiment of the invention the signal processor is programmed to compare either the determined value of the power being drawn by the pressing means to rotate the material therein or the value of the monitored characteristic indicative of the tension in the endless drive transmission element with a corresponding first threshold value, and if the determined value of the power or the value of the monitored characteristic exceed the corresponding first threshold value, the signal processor is programmed to commence timing a first time period from the time the determined value of the power or the value of the monitored characteristic exceeds the corresponding first threshold value until the determined value of the power or the value of the monitored characteristic ceases to exceed the corresponding first threshold value.

In another embodiment of the invention the signal processor is programmed to time and date stamp the time value of each first time period and to store in memory each time value of each first time period in memory. Preferably, the signal processor is programmed to cumulatively sum the time values of the respective first time periods, and to store in memory the cumulative sum of the time values of the first time periods in memory.

In another embodiment of the invention the signal processor is programmed to compute the cumulative value of the cumulatively summed time values of the first time periods as a proportion of the total operating time of the pressing means.

In one embodiment of the invention the first threshold value is stored in memory and comprises a value, over which the value of the power drawn by the pressing means to rotate the material therein or as a value over which the value of the monitored characteristic, should only be exceeded for short time periods.

In another embodiment of the invention the signal processor is programmed to compare either the determined value of the power or the value of the monitored characteristic with a corresponding second threshold value, greater than the first threshold value, each time the determined value of the power or the value of the monitored characteristic exceed the first threshold value, and if the determined value of the power or the value of the monitored characteristic exceeds the corresponding second threshold value, the signal processor is programmed to commence timing a second time period from the time the determined value of the power or the value of the monitored characteristic exceeds the corresponding second threshold value until the determined value of the power or the value of the monitored characteristic ceases to exceed the corresponding second threshold value.

In another embodiment of the invention the signal processor is programmed to time and date stamp and store in memory the time value of each second time period.

Preferably, the signal processor is programmed to cumulatively sum the time values of the second time periods, and to store the cumulative sum of the values of the second time periods in memory.

In another embodiment of the invention the signal processor is programmed to compute the cumulative value of the summed second time periods as a proportion of the total operating time of the pressing means.

In one embodiment of the invention the second threshold value is stored in memory and comprises a value over which the value of the power drawn by the pressing means to rotate the material therein, or a value of the monitored characteristic should only be exceeded for short time periods, shorter than the time periods during which the first threshold value may be exceeded.

In one embodiment of the invention the signal processor is programmed to compare the determined value of the power or the value of the monitored characteristic with a corresponding third threshold value, greater than the second threshold value each time the determined value of the power or the value of the monitored characteristic exceeds the second threshold value, and if the determined value of the power or the value of the monitored characteristic exceeds the third threshold value, the signal processor is programmed to commence timing of a third time period from the commencement of the determined value of the power or the value of the monitored characteristic exceeding the third threshold value until the determined value of the power or the value of the monitored characteristic ceases to exceed the third threshold value, and to time and date stamp and store in memory the time value of each third time period.

Preferably, the signal processor is programmed to cumulatively sum the time values of the respective third time periods, and to store the cumulative sum of the time values of the third time periods in memory.

In another embodiment of the invention the signal processor is programmed to compute the cumulative value of the summed time values of the third time periods as a proportion of the total operating time of the pressing means.

Preferably, the third threshold value is stored in memory and comprises a value over which the value of the power drawn by the pressing means to rotate the material therein or the value of the monitored characteristic should only be exceeded for short time periods, shorter than the time periods during which the second threshold value may be exceeded

In another embodiment of the invention the capacity of the pressing means is selectable.

In one embodiment of the invention the signal processor is programmed to determine the power being drawn by the pressing means to rotate the material therein from the value of the signal read from the monitoring means.

In another embodiment of the invention the signal processor is programmed to produce a signal indicative of the power being drawn by the pressing means, and preferably, the signal indicative of the power being drawn by the pressing means produced by the signal processor is adapted for conversion into a human sensory perceptible signal, and preferably, is adapted for applying to a visual display screen for displaying the power being drawn by the pressing means thereon. Preferably, the signal indicative of the power being drawn by the pressing means is indicative of the power currently being drawn by the pressing means.

Additionally, the signal processor is programmed to compute the quantity of material in the pressing means as a function of either the determined value of the power being drawn by the pressing means to rotate the material therein or the value of the monitored characteristic read from the monitoring means.

In another embodiment of the invention the signal processor is programmed to compute the quantity of material in the pressing means from a relationship between the quantity of material in the pressing means and either the power being drawn by the pressing means to rotate the material therein, or the monitored characteristic read from the monitoring means.

Preferably, the relationship between the quantity of material in the pressing means and either the power being drawn by the pressing means to rotate the material therein or the monitored characteristic read from the monitoring means comprises a linear relationship, and preferably, the relationship may be represented by an equation in the following form:

$$y = m_2 x + c_2 \quad\text{.................................................... (2)}$$

where $y$ represents the quantity of material in the pressing means,

$x$ represents either the value of the power being drawn by the pressing means to rotate the material therein or the value of the monitored characteristic read from the monitoring means, and

$m_2$ and $c_2$ are constants determined empirically.

In one embodiment of the invention the relationship between the quantity of material in the pressing means and either the value of the power being drawn by the pressing means to rotate the material therein, orthe value of the characteristic indicative of the tension in the endless drive transmission element comprises the linear relationship when the material to be baled comprises a crop material of a moisture content in the range of approximately 40% to approximately 60%, and may be represented by the linear equation (2).

In another embodiment of the invention the relationship between the quantity of material in the pressing means and either the value of the power being drawn by the pressing means to rotate the material therein, or the value of the characteristic indicative of the tension in the endless drive transmission element comprises the linear relationship when the crop material comprises haylage, and may be represented by the linear equation (2).

In another embodiment of the invention the relationship between the quantity of material in the pressing means and either the value of the power being drawn by the pressing means to rotate the material therein, or the value of the characteristic indicative of the tension in the endless drive transmission element comprises a non-linear relationship, and in one embodiment of the invention the non-linear relationship may be represented by a power law equation, and in one embodiment of the invention may be represented by a power law equation in the form

$$y = c_3^{\,x} \quad \dots\dots\dots\dots\dots\dots\dots\dots\dots\dots\dots\dots\dots (3)$$

where $y$ represents the quantity of material in the pressing means,

$x$ represents the value of power being drawn by the pressing means to rotate the material therein, or the value of the characteristic indicative of the tension in the endless drive transmission element, and

$c_3$ is a constant determined empirically.

In one embodiment of the invention the non-linear relationship between the quantity of material in the pressing means and either the value of the power being drawn by the pressing means to rotate the material therein, or the value of the characteristic indicative of the tension in the endless drive transmission element may be represented by a power law equation when the material to be baled comprises crop material of a moisture content of approximately 60% and greater.

In another embodiment of the invention the non-linear relationship between the quantity of material in the pressing means and either the value of the power being drawn by the pressing means to rotate the material therein, or the value of the characteristic indicative of the tension in the endless drive transmission element, may be represented by a power law equation when the crop material comprises grass silage.

In a further embodiment of the invention the non-linear relationship between the quantity of material in the pressing means and either the value of the power being drawn by the pressing means to rotate the material therein, or the value of the characteristic indicative of the tension in the endless drive transmission element may be represented by a polynomial equation, and preferably, a polynomial equation in the form of

$$y = ax^3 \pm bx^2 \pm cx \pm d \quad \dots\dots\dots\dots\dots\dots\dots\dots\dots (4)$$

where $y$ represents the quantity of material in the pressing means,

$x$ represents either the value of the power being drawn by the pressing means to rotate the material therein, or the value of the characteristic indicative of the tension in the endless drive transmission element, and

$a$, $b$, $c$ and $d$ are constants determined empirically.

In one embodiment of the invention the non-linear relationship between the quantity of material in the pressing means and either the value of the power being drawn by the pressing means to rotate the material therein, orthe value of the characteristic indicative of the tension in the endless drive transmission element may be represented by a polynomial equation when the material to be baled comprises a crop material of a moisture content of approximately 20% or less.

In a further embodiment of the invention the non-linear relationship between the quantity of material in the pressing means and eitherthe value of the power being drawn by the pressing means to rotate the material therein, or the value of the characteristic indicative of the tension in the endless drive transmission element may be represented by a polynomial equation when the crop material comprises straw, and preferably, wheat straw.

In one embodiment of the invention the signal processor is programmed to produce a signal indicative of the quantity of material in the pressing means, and preferably, the signal indicative of the quantity of material in the pressing means produced by the signal processor is adapted for conversion into a human sensory perceptible signal, and preferably, is adapted for applying to a visual display screen for displaying the quantity of material in the pressing means thereon.

Preferably, the signal indicative of the quantity of material in the pressing means is indicative of the quantity of material currently in the pressing means.

In one embodiment of the invention the signal processor is programmed to determine either the current rate at which the power being drawn by the pressing means to rotate the material therein is increasing per unit time, or the current rate at which the characteristic indicative of tension in the endless drive transmission element through which power is being drawn by the pressing means is increasing per unit time, and to determine the current ground speed of the baler, and to determine the optimum ground speed of the baler as a function of the optimum rate of increase in the value of the power or in the value of the characteristic indicative of tension in the endless drive transmission element per unit time, the current increase in the value of power or in the value of the characteristic indicative of the tension in the endless drive transmission element per unit time, and the current ground speed of the baler.

In another embodiment of the invention the signal processor is programmed to compute the optimum ground speed of the baler as a function of the current ground speed of the baler, and either the optimum rate at which material should be delivered into the pressing means and the current rate at which the material is being delivered into the pressing means, or the optimum rate at which the power being drawn by the pressing means to rotate the material therein should increase and the current rate at which the power being drawn by the pressing means to rotate the material therein is increasing, or the optimum rate at which the monitored characteristic read from the monitoring means should increase and the current rate at which the monitored characteristic read from the monitoring means is increasing.

Advantageously, the signal processor is programmed to compute the optimum ground speed of the baler as a function of the current ground speed of the baler multiplied by either the ratio of the optimum rate at which the material should be delivered into the pressing means to the current rate at which the material is being delivered into the pressing means, or the ratio of the optimum rate at which the power being drawn by the pressing means to rotate the material therein should increase to the current rate at which the power being drawn by the pressing means to rotate the material therein is increasing, or the ratio of the optimum rate at which the monitored characteristic read from the monitoring means should increase to the current rate at which the monitored characteristic read from the monitoring means is increasing.

In one embodiment of the invention the signal processor is programmed to compute the rate at which the material is being delivered into the pressing means.

In another embodiment of the invention the signal processor is programmed to determine the rate at which the power being drawn by the pressing means to rotate the material therein is increasing.

In a further embodiment of the invention the signal processor is programmed to determine the rate at which the monitored characteristic read from the monitoring means is increasing.

In one embodiment of the invention the signal processor is configured to read signals from a ground speed monitoring means for monitoring the ground speed of the baler.

In another embodiment of the invention the signal processor is programmed to output a signal indicative of the optimum ground speed of the baler, and preferably, the signal indicative of the optimum ground speed of the baler is adapted for conversion to a human sensory perceptible signal, and preferably, is adapted for applying to a visual display screen for displaying the optimum ground speed of the baler on the visual display screen.

In another embodiment of the invention the signal indicative of the optimum ground speed of the baler is adapted for applying to a speed controller for controlling the ground speed of the baler at the optimum ground speed.

In another embodiment of the invention the signal indicative of the optimum ground speed of the baler is adapted for applying to a speed controller of a prime mover towing the baler for controlling the speed of the prime mover to tow the baler at the optimum ground speed.

In another embodiment of the invention an urging means is provided for urging the tensioning means into engagement with the endless drive transmission element, and preferably, the urging means comprises a resilient urging means, and advantageously, the urging means comprises a spring, and preferably, the spring comprising either a tension spring, a compression spring or a torsion spring, and in another embodiment of the invention the spring comprises either a mechanical spring, a pneumatic spring or an hydraulic spring.

In another embodiment of the invention the monitoring means comprises an angle sensor, and advantageously, the monitoring means comprises a Hall effect angle sensor.

In another embodiment of the invention the monitoring means comprises an inclinometer.

In one embodiment of the invention the baler comprises a chassis, and preferably, the tensioning means is pivotally coupled relative to the chassis, and preferably, the tensioning means is pivotally coupled to the chassis about the pivot axis of the tensioning means.

In one embodiment of the invention the baler comprises a fixed chamber baler, and the pressing means comprises a plurality of bale rotating rollers configured in a substantially circular array defining a bale chamber within which the bale is rotated, pressed and formed, the bale rotating rollers being arranged circumferentially around the bale chamber and being configured for rotating, pressing and forming the material therein into a bale in the bale chamber. Advantageously, the bale rotating rollers are driven by power transmitted thereto through the endless drive transmission element.

In an alternative embodiment of the invention the baler comprises a belt baler, and the pressing means comprises one or more belts carried on a plurality of belt carrying rollers, and driven by at leastone of the belt carrying rollers for rotating, pressing and forming material into a bale, and preferably, one or more of the belt carrying rollers is driven by power transmitted thereto from the endless drive transmission element.

In another embodiment of the invention the baler comprises a gearbox adapted to receive power from the power source, and preferably, from a power take-off shaft of a prime mover.

In one embodiment of the invention the gearbox comprises a first power output shaft and preferably, the rotatably mounted driving element is driven by the first power output shaft, and advantageously, the rotatably mounted driving element is mounted fast on the first power output shaft.

In another embodiment of the invention the baler is adapted for towing by a prime mover.

Additionally, the invention provides a baler operating in accordance with the method according to the invention.

The invention also provides a combined baler/bale wrapper comprising the baler according to the invention, and a bale wrapper mounted relative to the baler for receiving a bale therefrom.

The advantages of the invention are many. A particular important advantage of the invention is that a signal indicative of the current quantity of material in the pressing means is produced from the commencement of forming material into a bale in the pressing means until the bale has been fully formed. This signal indicative of the current quantity of material in the pressing means may be applied to any suitable visual display unit for displaying the current quantity of material in the pressing means. In cases where the baler is being towed by a prime mover, for example, a tractor, and a visual display unit is located in the cab of the tractor, the signal indicative of the current quantity of material in the pressing means may be applied to the visual display unit, and the tractor driver is then continuously appraised of the quantity of material in the pressing means. The visual display screen of the visual display unit may be configured to present the current quantity of material in the pressing means graphically whereby the current quantity of material in the pressing means would be displayed as a proportion of the total capacity of the pressing means, or alternatively or additionally, the visual display screen may be configured to continuously appraise the driver of the current quantity of material in the pressing means by alphanumeric text. By knowing the current quantity of material in the pressing means, the driver of the tractor may then decide when the formation of the bale has been completed, and then take appropriate action. In cases where the size of the bale to be formed by the pressing means has been preselected, when the quantity of material in the pressing means corresponds to the selected size of the bale, a signal may be sent to the tractor driver informing the tractor driver that the bale has been formed to the selected bale size.

A further advantage of the invention is that by virtue of the fact that a signal indicative of the power currently being drawn by the pressing means to rotate the material in the pressing means is produced, the signal indicative of the power may also be applied to a visual display unit in the cab of a tractor towing the baler indicating either graphically or in text the current value of power being drawn by the pressing means.

The tractor driver may then determine if the current value of the power being drawn by the pressing means to rotate the material in the pressing means is excessive, and if so, a decision may then be taken by the driver to take corrective action to reduce the power being drawn by the pressing means to rotate the material in the pressing means. On the other hand, should the power being drawn by the pressing means to rotate the material therein to low, the tractor driver may make a decision to increase the ground speed of the baler in order that the delivery of material into the pressing means is accelerated, thereby increasing the efficiency of baling the material.

By virtue of the fact that a signal indicative of the optimum ground speed of the baler is produced, and the signal may be applied to a visual display unit in the cab of a tractor towing the baler, or may be applied to a speed controller of the tractor, enables the baler to be towed by the tractor at the optimum ground speed, thereby maximising the efficiency of the baler in producing bales of the material. In cases where the signal indicative of the optimum ground speed of the baler is applied to a speed controller of the tractor, the ground speed of the baler is automatically regulated, and in cases where the signal indicative of the optimum ground speed of the baler is applied to a visual display unit in the cab of a tractor towing the baler, the driver of the baler may readily alter the speed of the tractor to the optimum ground speed. This is a particularly important advantage of the invention where the cross-sectional area and the density of the windrow of crop material being picked up by the baler is inconsistent and varying along the length of the windrow, since the ground speed of the baler can be matched to the current cross-sectional area and density of the windrow of crop material.

Another particularly important advantage of the invention is that by providing an alert signal to a driver of a tractor towing the baler in the event of the power being drawn by the pressing means to rotate the material therein exceeding a third threshold value, the driver of the tractor may immediately take corrective action to reduce the power being drawn by the pressing means, thereby avoiding any safety cut-out mechanisms or clutches of the baler being operated to disengage drive to the pressing means.

A further advantage of the invention is achieved by providing an alert signal to the driver of the tractor towing the baler, which is indicative of completion of the forming of the bale in the pressing means, so that the driver of the tractor may take the next appropriate action, which typically, would be to initiate circumferential wrapping or securing of the bale in the pressing means. This provides the additional advantage that the bale may be formed to a selected size and density, which may be preselected in the baler, thereby avoiding any danger of a bale being formed to a size or a bale density greater or less than a preselected size or density.

Another particularly important advantage of the invention is achieved by virtue of the fact that the first second and third time periods during which the pressing means is being operated above the first, second and third threshold values, respectively, are recorded, and are also cumulatively recorded and stored as a proportion of the total operating time of the baler. This allows the time and date at which the baler is due for the next service to be determined, and a signal indicative of the date and time for the next service may be applied to a visual display unit in the cab of a tractor towing the baler to thereby appraise the tractor driver of the imminent requirement to service the baler. An additional advantage of storing the first, second and third time periods at which the pressing means is operated above the first, second and third threshold values stored cumulatively, enables a manufacturer or provider of the baler to ascertain if the baler had been operated in a normal manner should there be a dispute over a guarantee covering the baler.

The invention will be more clearly understood from the following description of some preferred embodiments thereof, which are given by way of example only with reference to the accompanying drawings, in which:

Fig. 1 is a side perspective view of a combined baler/bale wrapper according to the invention comprising a baler also according to the invention,

Fig. 2 is a perspective view of the baler of Fig. 1 illustrating the baler in the state of Fig. 1,

Fig. 3 is a perspective view of the baler of Fig. 1 illustrating the baler in a different state to that of Fig. 1,

Fig. 4 is a perspective view of the baler of Fig. 1 with the baler in a further different state to that of Fig. 1,

Fig. 5 is a cut-away perspective view of the baler of Fig. 1 with the baler in the state of Fig. 1,

Fig. 6 is a side elevational view of the baler of Fig. 1 with the baler illustrated in the state of Fig. 4,

Fig. 7 is a side elevational view of a portion of the baler of Fig. 1 from the other side of the baler to that of Fig. 6,

Fig. 8 is a top plan view of a portion of the baler of Fig. 1 illustrating a part of a drive transmission system of the baler of Fig. 1,

Fig. 9 is a side elevational view of a detail of the drive transmission system of the baler of Fig. 1,

Fig. 10 is an enlarged perspective view of the drive transmission system of the baler of Fig. 1,

Fig. 11 is an enlarged side elevational view of a portion of the drive transmission system of the baler of Fig. 1,

Fig. 12 is another perspective view of the drive transmission system of the baler of Fig. 1,

Fig. 13 is a block diagram of control circuitry of the baler of Fig. 1,

Fig. 14 illustrates a graph illustrating a relationship between power being drawn by the baler and a characteristic indicative of tension in the drive transmission system of the baler of Fig. 1,

Fig. 15 illustrates three graphs illustrating the relationship between the quantity of material in a bale chamber of the baler and a characteristic indicative of tension in the drive transmission system of the baler of Fig. 1,

Fig. 16 is a side elevational view of a baler according to another embodiment of the invention, and

Fig. 17 is an enlarged side elevational view of a portion of the baler of Fig. 16 illustrating a drive transmission system of the baler of Fig. 16.

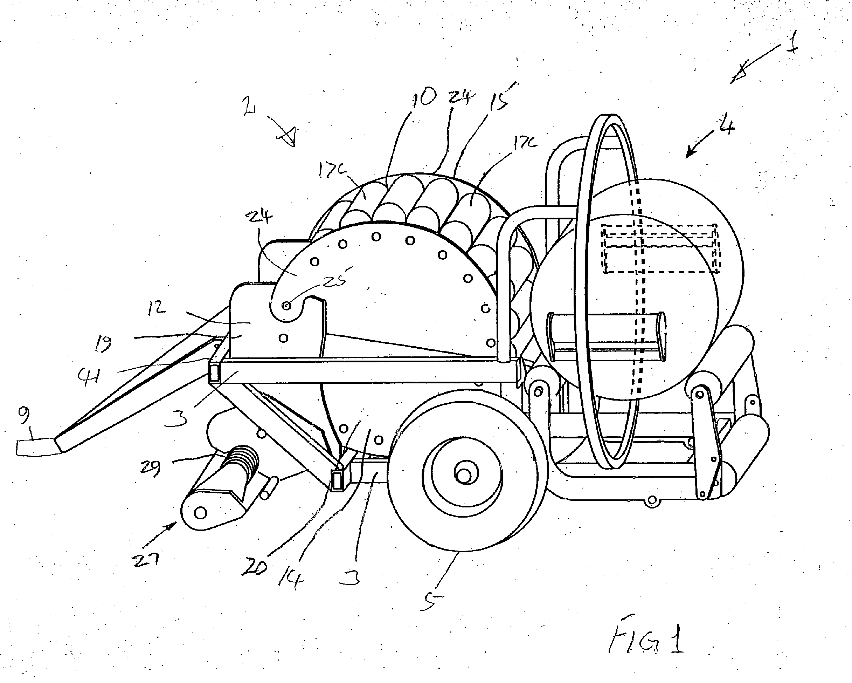

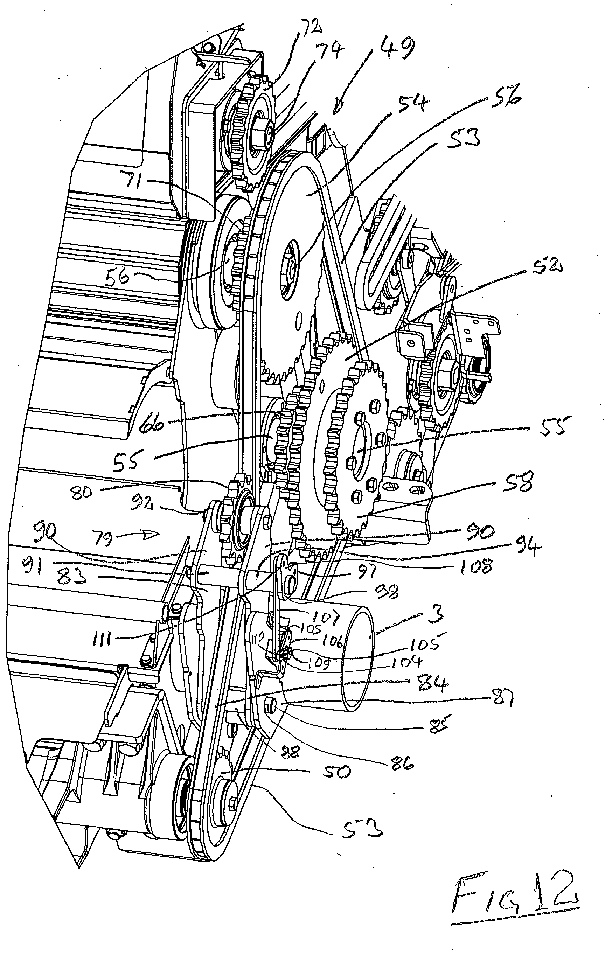

Referring to the drawings, and initially to Figs. 1 to 15 thereof, there is illustrated a combined baler/bale wrapper according to the invention indicated generally by the reference number 1, which is particularly suitable for baling and wrapping crop material, for example, grass silage, hay, straw and the like, to form relatively large wrapped cylindrical bales, commonly referred to as round bales, wrapped end-to-end in plastics film material. The wrapped bales, typically, are of diameter in the range of 500mm to 2,000mm and of axial length in the range of 1,100mm to 1,300mm, but more typically are of diameter in the range of 700mm to 1,300mm, and are of axial length in the range of 1,200mm to 1,250mm. In this embodiment of the invention the combined baler/bale wrapper 1 comprises a baler also according to the invention and indicated generally by the reference numeral 2, within which the bale is formed and circumferentially wrapped, and a bale wrapper 4 to which a formed bale is transferred from the baler 2 for end-to-end wrapping thereof.

The combined baler/bale wrapper 1 is of the type which is disclosed in PCT Published Patent Application Specification No. WO 2002/076183, and the baler 2 as well as the bale wrapper 4 are substantially similar to the baler and the bale wrapper of the combined baler/bale wrapper disclosed in PCT Published Specification No. WO 2002/076183. The combined baler/bale wrapper 1 is suitable for towing by a prime mover, and typically, for towing by a tractor, and is suitable for powering by a power take-off shaft from the tractor for powering the mechanical movements of the combined baler/bale wrapper 1, and by the hydraulic system of the tractor for powering the hydraulic system of the combined baler/bale wrapper 1, as will be understood by those skilled in the art.

The baler 2 and the bale wrapper 4 are mounted on a chassis 3 supported on a pair of rotatably mounted main ground engaging wheels 5. A hitch 9 extends forwardly from the chassis 3 for hitching the combined baler/bale wrapper 1 to the tractor. The baler 2 is of the type commonly referred to as a fixed chamber baler, although, the baler 2 may be a variable chamber baler, of the type commonly referred to as a belt baler. Since only the baler2 is relevant to the present invention, only the baler 2 will be described, and for convenience, only the parts of the baler 2 which are relevant to the invention will be described in detail.

The baler 2 comprises a pressing means for rotating, pressing and forming a round bale, which in this embodiment of the invention comprises a bale chamber 10, within which the crop material is rotated, pressed and formed into a round bale. The baler 2 is configured to utilise a method also according to the invention, as will be described in detail below, for determining the power currently being drawn by the bale chamber 10 to rotate the crop material therein, the quantity of crop material currently in the bale chamber 10, and the optimum ground speed of the combined baler/bale wrapper 1 to optimise between the power being drawn by the bale chamber 10 to rotate the crop material therein and the rate at which the crop material is being delivered into the bale chamber 10.

In this embodiment of the invention the method according to the invention, as will be described below, determines the quantity of material currently in the bale chamber 10 as a proportion of the capacity of the bale chamber 10, and a signal is produced indicative of the quantity of crop material currently in the bale chamber as a proportion of the capacity of the bale chamber, which is suitable for or is convertible to a signal for applying to a visual display unit located, for example, in the cab of the tractor towing the baler/bale wrapper 1 to produce a human sensory perceptible signal indicative of the quantity of the crop material in the bale chamber on a visual display screen of the visual display unit. The baler 2, as will also be described below, produces a signal indicative of the power currently being drawn by the bale chamber 10 to rotate the crop material therein, which is also suitable for or is convertible to a signal for applying to the visual display unit in the cab of a tractor to produce a human sensory perceptible signal on the screen thereof indicative of the power currently being drawn by the bale chamber 10 to rotate the crop material therein. The baler 2 also produces a signal indicative of the optimum ground speed at which the combined baler/bale wrapper should be towed. The signal indicative of the optimum ground speed is suitable for or is convertible to a signal for applying to the visual display unit located in the cab of the tractor to produce a sensory perceptible signal on the screen thereof of the optimum ground speed. The signal indicative of the optimum ground speed at which the baler/bale wrapper 1 should be towed is also suitable for applying to a speed controller of the tractor towing the baler or to a speed controller of the baler for controlling the speed at which the baler is being towed.

The bale chamber 10 is defined by three segments, namely, a fixed segment 12, a tipping segment 14 and a closure segment 15, each comprising pluralities of transversely extending bale rotating rollers 17 rotatably carried by the fixed, tipping and closure segments 12, 14 and 15. The bale rotating rollers 17 are closely spaced apart circumferentially around the bale chamber 10 and define the circumferential periphery of the bale chamber 10. The fixed segment 12 comprises three bale rotating rollers 17a. The tipping segment 14 comprises five bale rotating rollers 17b, and the closure segment 15 comprises ten bale rotating rollers 17c, although the number of bale rotating rollers 17 will depend on the diameter of the bale chamber 10 and the diameter of the bale rotating rollers 17.

The bale rotating rollers 17a of the fixed segment 12 of the bale chamber 10 extend transversely between and are rotatably carried on a pair of transversely spaced apart fixed end walls 19 which are rigidly secured to the chassis 3, and which with the bale rotating rollers 17a form the fixed segment 12. A pair of transversely spaced apart tippable end walls 20 of the tipping segment 14, between which the bale rotating rollers 17b extend, and are rotatably carried thereon, form the tipping segment 14. The tippable end walls 20 are pivotally coupled to the chassis 3 about a transversely extending first pivot axis 22, about which the tipping segment 14 is pivotal. The closure segment 15 comprises a pair of transversely spaced apart closure end walls 24, between which the bale rotating rollers 17c extend and are rotatably carried thereon to form with the closure end walls 24, the closure segment 15. The closure segment 15 is pivotally coupled to the fixed end walls 19 about a transversely extending second pivot axis 25. The fixed end walls 19, the tippable end walls 20 and the closure end walls 24 together define the opposite ends of the bale chamber 10.

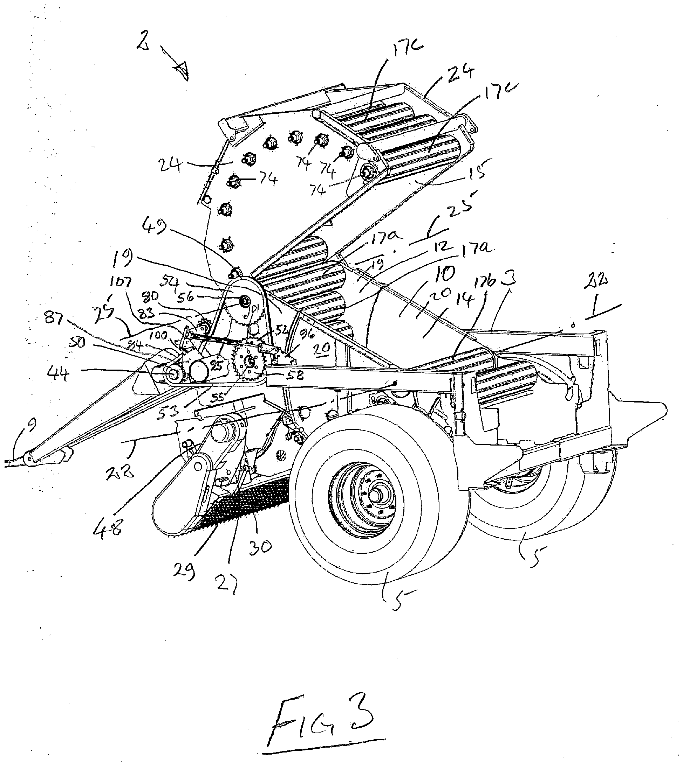

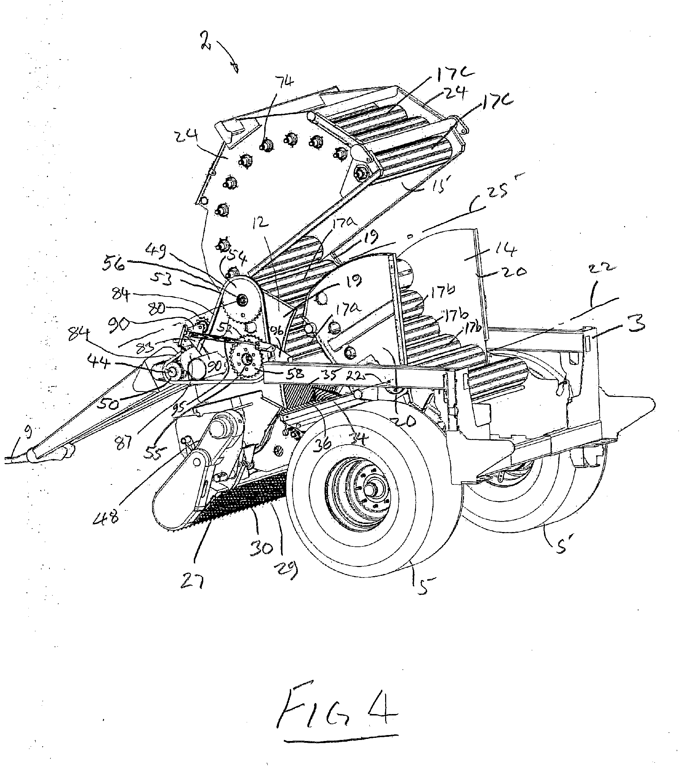

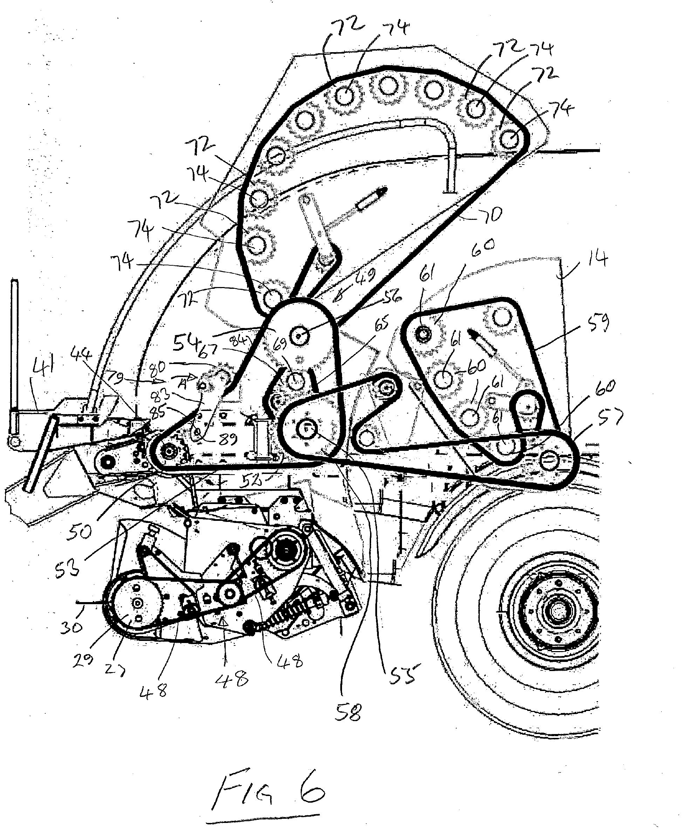

The tipping segment 14 is pivotal about the first pivot axis 22 from a bale forming state illustrated in Figs. 1, 2 and 5 cooperating with the fixed segment 12 and the closure segment 15 for defining the bale chamber 10, to a discharge state illustrated in Figs. 4 and 6 for discharging a formed bale from the bale chamber 10 onto the bale wrapper 4 for wrapping thereof. The closure segment 15 is pivotally mounted about the second pivot axis 25 from a closed state illustrated in Figs. 1, 2 and 5 cooperating with the fixed segment 12 and the tipping segment 14 for defining the bale chamber 10, to an open state illustrated in Figs. 3, 4 and 6 for facilitating discharge of a bale from the bale chamber 10 by the tipping segment 14.

A pair of double-acting hydraulic rams (not shown) located on opposite sides of the bale chamber 10 and acting between the chassis 3 and the closure segment 15 urge the closure segment 15 between the closed state and the open state. A pair of linkages (not shown) located on opposite sides of the bale chamber 10 couple the tipping segment 14 to the closure segment 15, so that as the hydraulic rams (not shown) are urging the closure segment 15 from the closed state to the open state, the tipping segment 14 is urged from the bale forming state to the discharge state for discharging a bale from the bale chamber 10 to the bale wrapper 4. The hydraulic rams (not shown) acting between the chassis 3 and the closure segment 15 also apply pressure to the closure segment 15 in the closed state thereof to retain the closure segment 15 in the closed state during forming of the crop material into a bale in the bale chamber 10, and to counteract the radial outward pressure of the crop material on the closure segment 15 as the formation of the crop material into the bale in the bale chamber 10 is nearing completion, in order that the bale is formed to the desired bale density.

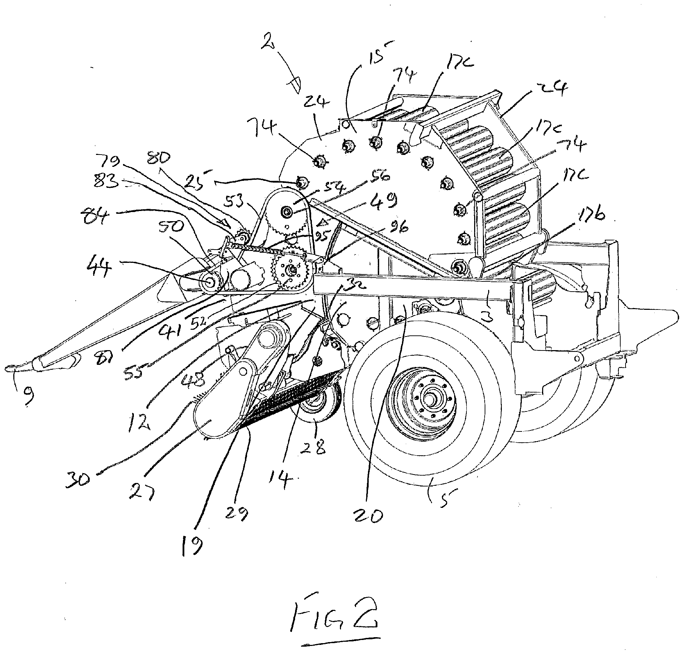

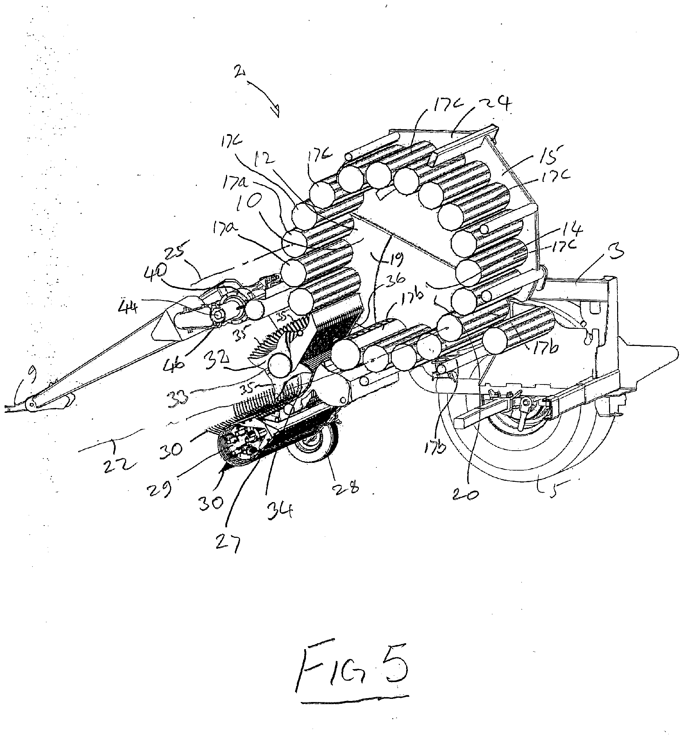

A pick-up means, in this case a pick-up mechanism 27 is pivotally coupled to the chassis 3, and is supported on a pair of transversely spaced apart secondary ground engaging wheels 28, only one of which is illustrated in Figs. 2 and 5. The pick-up mechanism 27 comprises a rotatably mounted pick-up drum 29 having a plurality of pick-up tines 30 radially extending therefrom for engaging and picking up crop material lying on the ground as the pick-up drum 29 rotates. The tines 30 extending radially from the drum 29 are circumferentially spaced apart around the drum 29 and are also axially spaced apart along the drum 29. The pick-up drum 29 transfers the crop material from the ground onto a transfer passageway 34.

A transfer means, in this embodiment of the invention comprising a transfer rotor 32 is rotatably mounted in the transfer passageway 34 intermediate the pick-up drum 29 and the bale chamber 10 for transferring crop material picked up by the pick-up drum 29 through the transfer passageway 34 to the bale chamber 10 for baling therein. The transfer rotor 32 comprises a drum 33 rotatably mounted on the transfer passageway 34. A plurality of chopping blades 35 extend radially from the drum 33. The chopping blades 35 are spaced apart axially along the drum 33, and are circumferentially spaced apart and angularly staggered around the drum 33. The chopping blades 35 are cooperable with a plurality of correspondingly transversely spaced apart stator blades 36 for chopping crop material as it is being transferred through the transfer passageway 34 to the bale chamber 10. The stator blades 36 are pivotally mounted beneath the transfer passageway 34 and are selectively operable between a working state extending through the transfer passageway 34 to cooperate with the chopping blades 35 of the transfer rotor 32 for chopping the crop material as it is being transferred along the transfer passageway 34, and a withdrawn state located beneath the transfer passageway 34 to allow transfer of the crop material by the transfer rotor 32 along the transfer passageway 34 without chopping of the crop material. Such a transfer rotor and stator blades as the transfer rotor 32 and the stator blades 36 and their operation for chopping crop material, and for transferring crop material along a transfer passageway into a bale chamber of a baler, will be well known to those skilled in the art.

Up to this the baler 2 of the combined baler/bale wrapper 1 is as discussed above a fixed chamber baler, and is of the type which is disclosed in PCT Specification No. WO 2002/076183, and will be well known to those skilled in the art.

A transmission system indicated generally by the reference numeral 39 is provided for receiving power from a power source, typically, from a power take-off shaft of the tractor towing the combined baler/bale wrapper 1, and for transmitting the power from the power take-off shaft of the tractor to the mechanical movements of the combined baler/bale wrapper 1, including the bale rotating rollers 17, the transfer rotor 32 and the pick-up drum 29 for driving thereof. Typically, the power from the power take-off shaft of the tractor is transmitted through a Cardan shaft (not shown) from the power take-off shaft of the tractor to the transmission system 39.

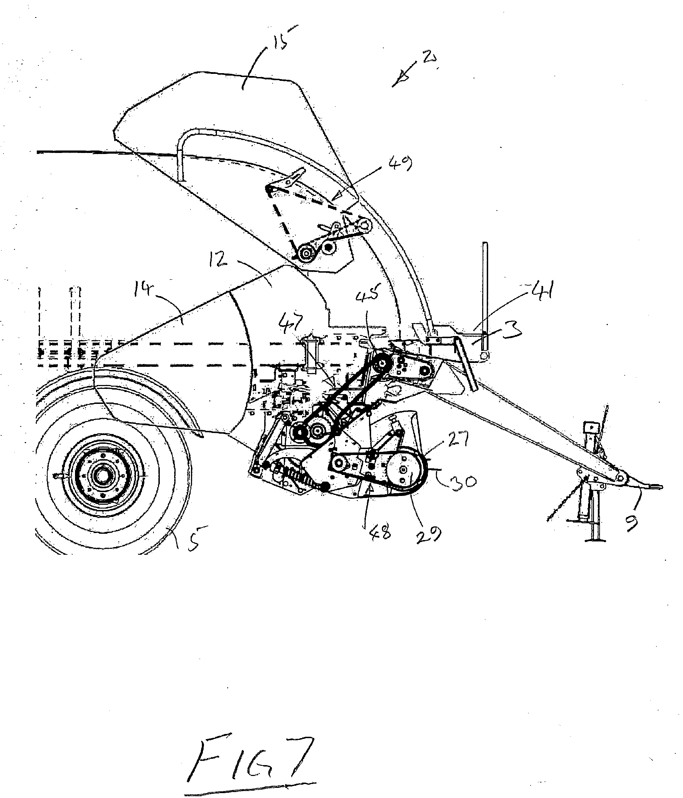

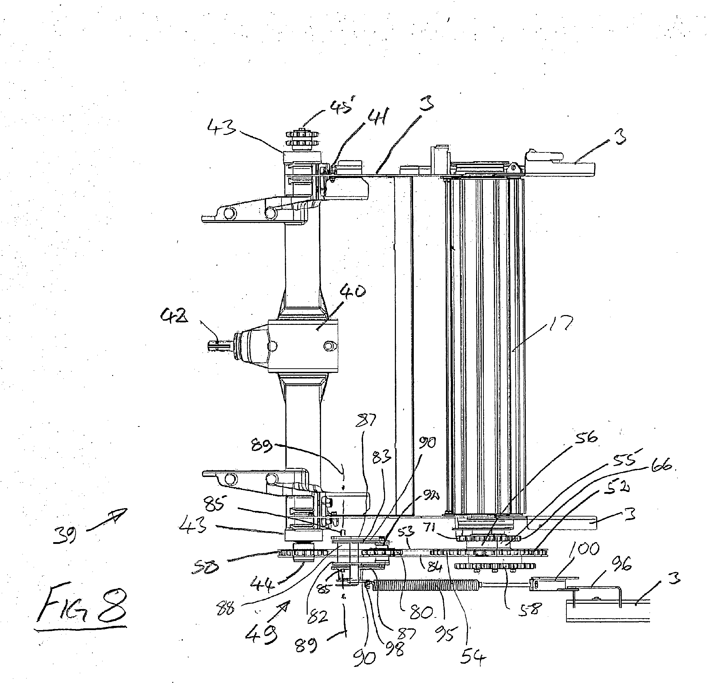

Referring in particular to Figs. 6 to 12, the transmission system 39 comprises a gearbox 40 mounted on the chassis 3 adjacent a forward end 41 of the chassis 3, see Fig. 8. The gearbox 40 comprises an input shaft 42 extending longitudinally forwardly from the gearbox 40 for coupling to the Cardan shaft (not shown), which in turn is coupled to the power take-off shaft of the tractor. Power is delivered to the gearbox 40 from the Cardan shaft through a resettable overload protection cut-out clutch, as will be well known to those skilled in the art, to break the driveline in the event of an overload occurring in the combined baler/bale wrapper 1. A pair of transversely extending power output shafts extend transversely from the gearbox 40 from respective opposite ends 43 thereof, namely, a first output shaft 44 and a second output shaft 45. The second output shaft 45 is adapted to apply power through a rotor chain drive transmission system 47 to the transfer rotor 32 for driving thereof, and in turn, through a pick-up chain drive transmission system 48 to the pick-up drum 29 of the pick-up mechanism 27 for driving thereof. The rotor chain drive transmission system 47 is illustrated in Fig. 7, and the pick-up chain drive transmission system 48 is illustrated in Figs. 6 and 7, and both will be well known to those skilled in the art, and further description should not be required.

The first output shaft 44 is adapted to provide power for transmission through a drive transmission system 49 to the bale rotating rollers 17 of the bale chamber 10 for rotating the bale rotating rollers 17, and in turn for rotating the crop material in the bale chamber 10. The drive transmission system 49 comprises a rotatable driving element, namely, a driving sprocket 50, a pair of rotatable driven elements, namely, a first driven sprocket 52 and a second driven sprocket 54, and an endless drive transmission element, namely, an endless main drive chain 53, see Figs. 8 to 12. The main drive chain 53 extends around and cooperates with the driving sprocket 50, the first driven sprocket 52 and the second driven sprocket 54 for transmitting drive from the driving sprocket 50 to the first and second driven sprockets 52 and 54.

The driving sprocket 50 is mounted fast on the first output shaft 44 of the gearbox 40 and rotates therewith. The first driven sprocket 52 is mounted fast on a first transmission shaft 55 rotatably mounted in the chassis 3 through which drive from the first driven sprocket 52 is transmitted to the bale rotating rollers 17a and 17b of the fixed segment 12 and the tipping segment 14, respectively, of the bale chamber 10. The second driven sprocket 54 is mounted fast on a second transmission shaft 56 rotatably mounted in the chassis 3, through which drive from the second driven sprocket 54 is transmitted to the bale rotating rollers 17c of the closure segment 15 of the bale chamber 10.

A first chain drive transmission 57 comprising a first transmission sprocket 58 mounted fast on the first transmission shaft 55 transmits drive from the first transmission shaft 55 to the bale rotating rollers 17b of the tipping segment 14, see Fig. 6. The first chain drive transmission 57 drives a secondary chain drive transmission 59, which in turn drives a plurality of sprockets 60 mounted fast on shafts 61 of the bale rotating rollers 17b of the tipping segment 14 for in turn rotating the bale rotating rollers 17b.

A second chain drive transmission 65 comprising a second transmission sprocket 66, see Figs. 6, 8 and 12, mounted fast on the first transmission shaft 55 drives a sprocket 67 fast on a shaft 69 rotatably mounted in the chassis 3, from which drive is transmitted to the bale rotating rollers 17a of the fixed segment 12 of the bale chamber 10.

A third chain drive transmission 70 comprising a third transmission sprocket 71 mounted fast on the second transmission shaft 56 transmits drive to sprockets 72 mounted fast on shafts 74 of the bale rotating rollers 17c of the closure segment 15 of the bale chamber 10 for driving the bale rotating rollers 17c of the closure segment 15.

A tensioning means comprising a tensioning unit 79 is provided for tensioning the main drive chain 53. The tensioning unit 79 is pivotally coupled to the chassis 3 and is engageable with a slack leg 84 of the main drive chain 53 extending between the driving sprocket 50 and the second driven sprocket 54 for tensioning thereof. The tensioning unit 79 comprises a carrier arm 83 and an engagement element, in this case, a tensioning sprocket 80 rotatably mounted on the carrier arm 83 and rollably engageable with the slack leg 84 of the main drive chain 53 for tensioning the slack leg 84 thereof, and in turn for tensioning the main drive chain 53.

The carrier arm 83 extends between a proximal end 82 and a distal end 93 and comprises a pair of transversely spaced apart elongated plate members 90 which are rigidly secured together by a first shaft 88 and a second shaft 91. The first shaft 88 extends between the plate members 90 adjacent the proximal end 82 of the carrier arm 83, and the second shaft 91 extends between the plate members 90 towards the distal end of the carrier arm 83.

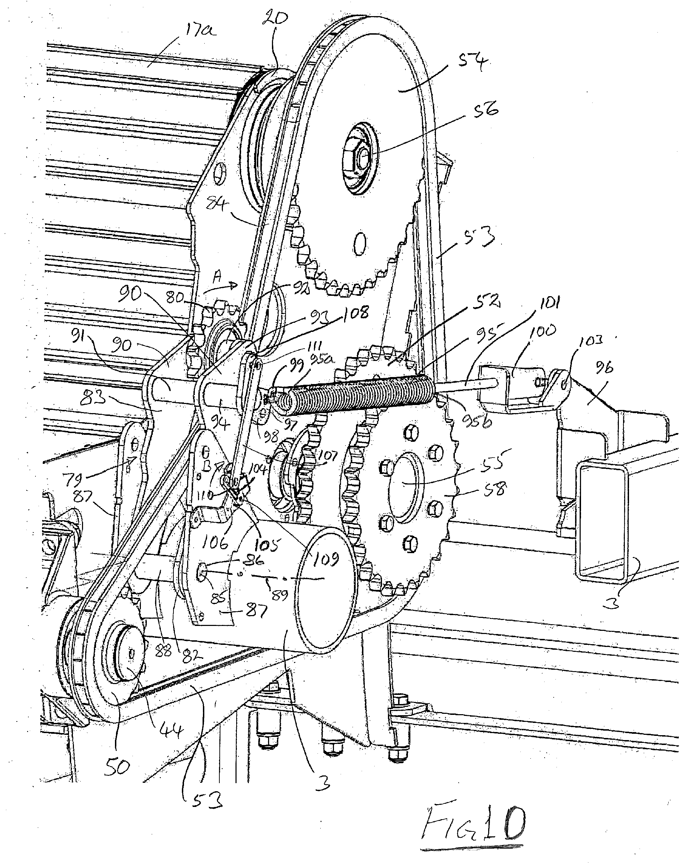

The carrier arm 83 is pivotal on a pivot mounting formed by a pair of concentric main pivot shafts 85 extending concentrically from opposite ends of the first shaft 88 and outwardly through the plate members 90 on opposite sides of the carrier arm 83 adjacent the proximal end 82 thereof. The main pivot shafts 85 pivotally engage corresponding pivot bores 86 located in a pair of transversely spaced apart mounting plates 87, which are rigidly secured to the chassis 3, see in particular Fig. 10. The main pivot shafts 85 define a main pivot axis 89 extending parallel to the first output shaft 44 of the gearbox 40, and about which the carrier arm 83 is pivotal relative to the chassis 3. A shaft 92 extending between the plate members 90 of the carrier arm 83, and rigidly secured to the plate members 90 adjacent the distal ends 93 thereof, rotatably carries the tensioning sprocket 80.

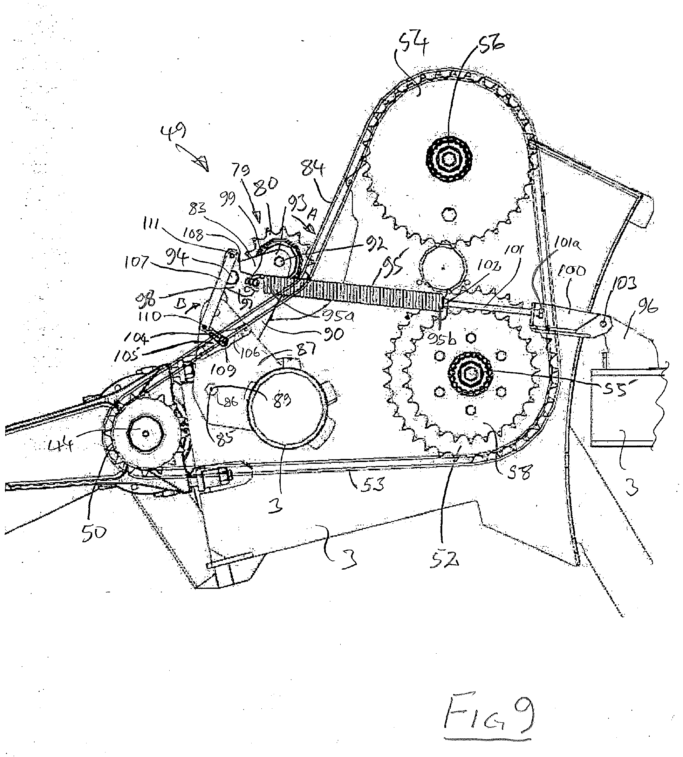

An urging means urges the tensioning unit 79 into engagement with the slack leg 84 of the main drive chain 53 for tensioning thereof. The urging means comprises a resilient urging means, in this case, a tension spring 95 acting between the carrier arm 83 and an anchor mounting, namely, an anchor mounting bracket 96 rigidly secured to the chassis 3. The tension spring 95 urges the carrier arm 83 about the main pivot axis 89 in the direction of the arrow A, for in turn urging the tensioning sprocket 80 into engagement with the slack leg 84 of the main drive chain 53 for tensioning thereof, see Figs. 9 and 10.

A first end 95a of the tension spring 95 is coupled to the carrier arm 83 by a coupling bracket 98 mounted fast on an extension 94 of the second shaft 91, which extends between the plate members 90 of the carrier arm 83. A coupling hook 99 extending from a first end 95a of the tension spring 95 engages a limb 97 of the coupling bracket 98 for coupling the tension spring 95 to the carrier arm 83. The tension spring 95 is coupled to the anchor mounting bracket 96 by a coupling bracket 100 and a threaded adjusting rod 101. The coupling bracket 100 is pivotally coupled to the anchor mounting bracket 96 by a pivot pin 103. The threaded adjusting rod 101 extends between the coupling bracket 100 and the tension spring 95. A threaded nut 102 is rigidly secured to the tension spring 95 adjacent a second end 95b thereof. The threaded adjusting rod 101 is engageable with the threaded nut 102 for securing the threaded adjusting rod 101 to the tension spring 95. The threaded adjusting rod 101 terminates in a hexagonal head 101a, and is retained captive in the coupling bracket 100 by the head 101a thereof. The tensioning force applied by the tension spring 95 to the tensioning unit 79, for in turn urging the tensioning sprocket 80 into engagement with the slack leg 84 of the main drive chain 53 for tensioning thereof is adjusted by urging the threaded adjusting rod 101 into and out of the tension spring 95 through the threaded nut 102.

Turning now to the method according to the invention for determining the power being drawn by the bale chamber 10 for rotating the crop material, and in turn the bale in the bale chamber 10, as the crop material is being formed into a bale in the bale chamber 10 during each bale forming cycle, the power being drawn by the bale chamber 10 to rotate the crop material therein progressively increases as the quantity of material in the bale chamber 10 progressively increases, and in turn, as the size of the bale in the bale chamber 10 progressively increases during the bale forming cycle. The power being drawn by the bale chamber 10 to rotate the crop material and the bale therein, is drawn by the bale rotating rollers 17. The power drawn by the bale rotating rollers 17 is transmitted to the bale rotating rollers 17 through the main drive chain 53 of the drive transmission system 49. The power being drawn by the bale rotating rollers 17 through the main drive chain 53 induces tension in the main drive chain 53.

It has been found that this tension induced in the main drive chain 53 as the power is being transmitted therethrough to the bale rotating rollers 17 is proportional to the power being drawn by the bale rotating rollers 17. It has also been found that this tension induced in the main drive chain 53 results in elastic stretching of the main drive chain 53 based on Young's modulus of the steel of the parts of the main drive chain under tension. Additionally, it has been found that the elastic stretching of the main drive chain 53 is proportional to the tension in the main drive chain 53 induced by the power being transmitted therethrough, and is in turn proportional to the power being drawn by the bale rotating rollers 17. The elastic stretching of the main drive chain 53 occurs in the leg of the main drive chain 53 extending between the driving sprocket 50 and the first driven sprocket 52 and the leg of the main drive chain 53 extending between the first driven sprocket 52 and the second driven sprocket 54.

This elastic stretching of the main drive chain 53 results in a corresponding increase in the length of the slack leg 84 of the main drive chain 53. Accordingly, the increase in the length of the slack leg 84 of the main drive chain 53 is proportional to the power being drawn by the bale rotating rollers 17, and is a substantially linear relationship.

The tensioning sprocket 80 of the tensioning unit 79, being urged into engagement with the slack leg 84 of the main drive chain 53 by the tension spring 95, takes up the slack in the slack leg 84 and any slack in the slack leg 84 resulting from the elastic stretching of the main drive chain 53. Accordingly, the angular displacement of the carrier arm 83 of the tensioning unit 79 about the main pivot axis 89 from a datum position is similarly proportional to the change in length of the slack leg 84 of the main drive chain 53 resulting from elastic stretching of the main drive chain 53. In order to determine the angular displacement of the carrier arm 83 from the datum position resulting from the elastic stretching of the main drive chain 53, the datum position of the carrier arm 83 is determined as the angular position of the carrier arm 83 when the bale rotating rollers 17 are being driven in rotation through the main drive chain 53 in a no-load state of the bale chamber 10, in other words, when there is no crop material in the bale chamber 10 and when the pick-up drum 29 and the transfer rotor 32 are free of crop material.

A monitoring means for monitoring the angular displacement of the carrier arm 83 of the tensioning unit 79 about the main pivot axis 89 from the datum position comprises an angle monitoring sensor, which in this embodiment of the invention is provided by a Hall effect angle sensor 105. However, it will be appreciated that any other suitable sensor may be used. The angle sensor 105 comprises a housing 106 which is rigidly secured to an outer one of the two mounting plates 87. An arm 104 of the angle sensor 105, is mounted fast on and extends radially from a secondary pivot shaft 109, which is rotatably mounted in the housing 106. An angle detecting system (not shown) in the housing 106 monitors the angular rotation of the secondary pivot shaft 109, and in turn the angular displacement of the arm 104 relative to the housing 106, and produces an electronic analogue signal indicative of the angular displacement of the arm 104 relative to the housing 106.

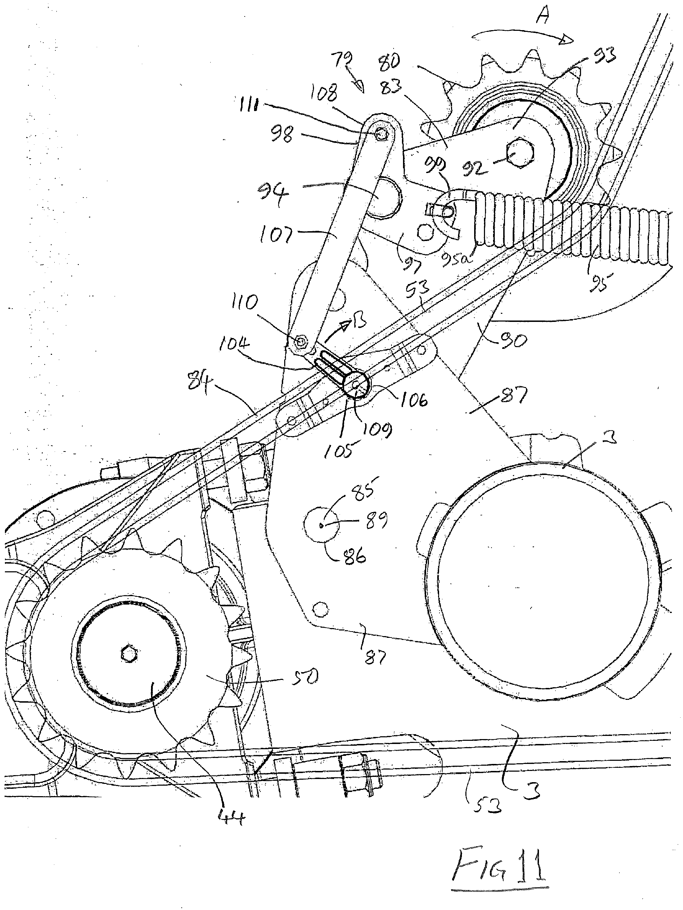

A linkage provided by a link member 107 couples the carrier arm 83 of the tensioning unit 79 to the arm 104 of the angle sensor 105, see Figs. 10 and 11. The link member 107 is pivotally coupled to the arm 104 of the angle sensor 105 by a pivot pin 110, and is pivotally coupled to another limb 108 of the coupling bracket 98 of the carrier arm 83 by a pivot pin 111. Since the coupling bracket 98 is rigidly secured to the extension 94 of the second shaft 91, the arm 104 of the angle sensor 105 follows the pivotal movement of the carrier arm 83.

Accordingly, as the carrier arm 83 pivots about the main pivot axis 89 in the direction of the arrow A under the action of the tension spring 95 as the length of the slack leg 84 of the main drive chain 53 increases, the link member 107 urges the arm 104 of the angle sensor 105 in the direction of the arrow B. The value of the signal produced by the angle sensor 105 is proportional to the angular displacement of the arm 104 of the angle sensor 105 relative to the housing 106, which in turn is proportional to the angular displacement of the carrier arm 83 about the main pivot axis 89 from the datum position thereof.

Accordingly, the value of the signal produced by the angle sensor 105 is proportional to and is indicative of the tension in the main drive chain 53, which in turn is proportional to and indicative of the power being drawn by the bale rotating rollers 17. The relationship between the power being drawn by the bale rotating rollers 17 and the signal produced by the angle sensor 105 is a substantially linear relationship, and may be represented by an equation in the form of the following equation number 1:

$$y = m_1 x + c_1 \dots\dots\dots\dots\dots\dots\dots\dots\dots\dots\dots (1)$$

where $y$ represents the value of the power being drawn by the bale rotating rollers 17,

$x$ represents the value of the signal produced by the angle sensor 105, and

$m_1$ and $c_1$ are constants determined empirically, $m_1$ being the slope of the line represented by the equation, and $c_1$ is the value of the power being drawn by the bale rotating rollers 17 when the value of the signal produced by the angle sensor 105 is zero, when the carrier arm is in the datum position.

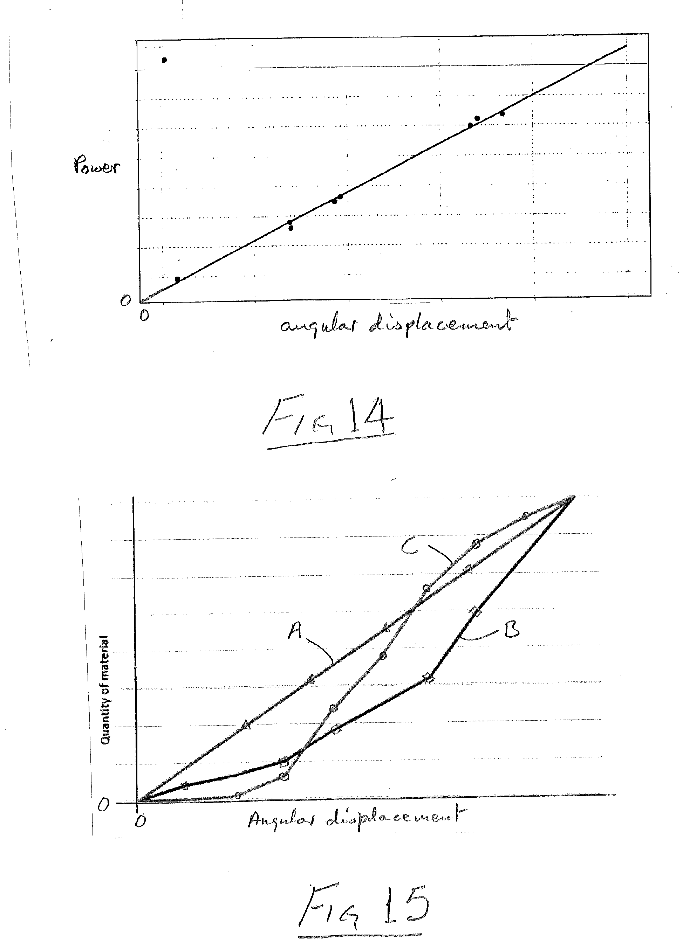

A graph representing the equation (1), namely, $y = m_1 x + c_1$ is illustrated in Fig. 14, in which the value of the power being drawn by the bale rotating rollers 17 is plotted on the Y axis, and the value of the signal produced from the angle sensor 105 is plotted on the X axis.

Turning now to the method according to the invention for determining the quantity of crop material in the bale chamber 10, it has been found that there is a relationship between the quantity of crop material in the bale chamber 10 and the power being drawn by the bale rotating rollers 17 to rotate the crop material, and in turn to rotate the bale in the bale chamber 10. Accordingly, there is therefore a relationship between the quantity of crop material in the bale chamber 10 and the tension in the main drive chain 53, and in turn there is a relationship between the quantity of crop material in the bale chamber 10 and the elastic stretching of the main drive chain 53, and therefore there is a relationship between the quantity of material in the bale chamber 10 and the angular displacement of the carrier arm 83 of the tensioning unit 79 about the main pivot axis 89 from the datum position. Thus, there is a relationship between the quantity of crop material in the bale chamber 10 and the signal produced by the angle sensor 105 which is indicative of the angular displacement of the carrier arm 83 about the main pivot axis 89 from the datum position thereof.

This relationship between the quantity of crop material in the bale chamber 10 and the value of the signal produced by the angle sensor 105 varies depending on the type of crop material being baled in the bale chamber 10. The relationship between the quantity of crop material in the bale chamber 10 and the angular displacement of the carrier arm 83 about the main pivot axis 89 from the datum position thereof is a substantially linear relationship when the crop material is of a medium moisture content in the range of approximately 40% to approximately 60%. Crop material of such a medium moisture content is, for example, haylage.

The relationship between the quantity of crop material in the bale chamber 10 and the angular displacement of the carrier arm 83 about the main pivot axis 89 from the datum position thereof for crop material of a high moisture content of approximately 60% and greater, and for crop material of a low moisture content of approximately 40% and less, is a non-linear relationship. Crop material of high moisture content of approximately 60% and greater is commonly referred to as wet crop material, and such a crop material comprises grass silage. Dry crop material of a moisture content of approximately 20% and less comprises straw, and in particular wheat straw.

Referring now to Fig. 15, three graphs, namely, Graphs A, B and C are illustrated. The graphs are plots of the quantity of three different types of material in the bale chamber 10 plotted on the Y axis, against the angular displacement of the carrier arm 83 about the main pivot axis 89 from the datum position thereof, which is represented by the value of the signal produced by the angle sensor 105 and plotted on the X axis. The graphs A, B and C represent the quantity of material in the bale chamber 10 during a bale forming cycle from the commencement of the bale forming cycle to the end of the bale forming cycle.

Turning initially to Graph A, Graph A represents a plot of the quantity of haylage in the bale chamber 10, which is a crop material of medium moisture content, namely, moisture content in the range of approximately 40% to approximately 60%. The quantity of haylage in the bale chamber 10 is plotted on the Y axis against the angular displacement of the carrier arm 83 about the main pivot axis 89 from the datum position thereof, which is represented by the value of the signal produced by the angle sensor 105. The relationship between the quantity of crop material in the bale chamber 10 and the angular displacement of the carrier arm 83 about the main pivot axis 89 from the datum position thereof, is a linear relationship, and may be represented by the following equation number 2:

$$y = m_2 x + c_2 \dots\dots\dots\dots\dots\dots\dots\dots\dots\dots (2)$$

where $y$ represents the quantity of haylage in the bale chamber 10 as a proportion of the size of the bale chamber,

*x* represents the value of the signal produced by the angle sensor 105, and

$m_2$ and $c_2$ are constants determined empirically, in this case, by curve fitting, as will be described below with $m_2$ being the slope of the line represented by equation (2), and $c_2$ is the value of the quantity of crop material in the bale chamber when the value of the signal produced by the angle sensor 105 is zero, in other words, when the carrier arm 83 is in the datum position.

Turning now to Graph B, Graph B represents the relationship between the quantity of grass silage in the bale chamber 10, which is a crop material of high moisture content of approximately 60% and greater, plotted on the Y axis against the angular displacement of the carrier arm 83 about the main pivot axis 89 from the datum position thereof represented by the value of the signal produced by the angle sensor 105 plotted on the X axis. As can be seen from Graph B, the relationship of the quantity of grass silage in the bale chamber 10 and the value of the signal produced by the angle sensor 105 is a non-linear relationship, and is a substantially exponential relationship, and may be represented by a power law equation in the form of the following equation number 3:

$$y = c_3^x \quad\text{................................................. (3)}$$

where *y* represents the quantity of grass silage in the bale chamber 10 in proportion to the size of the bale chamber 10,

*x* represents the value of the signal produced by the angle sensor 105, and

$c_3$ is a constant determined empirically, in this case by curve fitting as will be described below.

Turning now to Graph C, Graph C represents a plot of the quantity of wheat straw in the bale chamber 10, which is a crop material of moisture content of approximately 20% or less plotted on the Y axis against the angular displacement of the carrier arm 83 about the main pivot axis 89 from the datum position thereof represented by the value of the signal produced by the angle sensor 105 plotted on the X axis. The relationship between the quantity of wheat straw in the bale chamber 10 and the value of the signal read from the angle sensor 105 is a non-linear relationship and may be represented by a polynomial equation in the form of the following equation number 4:

$$y = ax^3 \pm bx^2 \pm cx \pm d \quad\text{.................................. (4)}$$

where *y* represents the quantity of wheat straw in the bale chamber 10 as a proportion of the size of the bale chamber,

*x* represents the value of the signal produced by the angle sensor 105, and

*a*, *b*, *c* and *d* are constants determined empirically, in this case, by curve fitting, as will be described below.

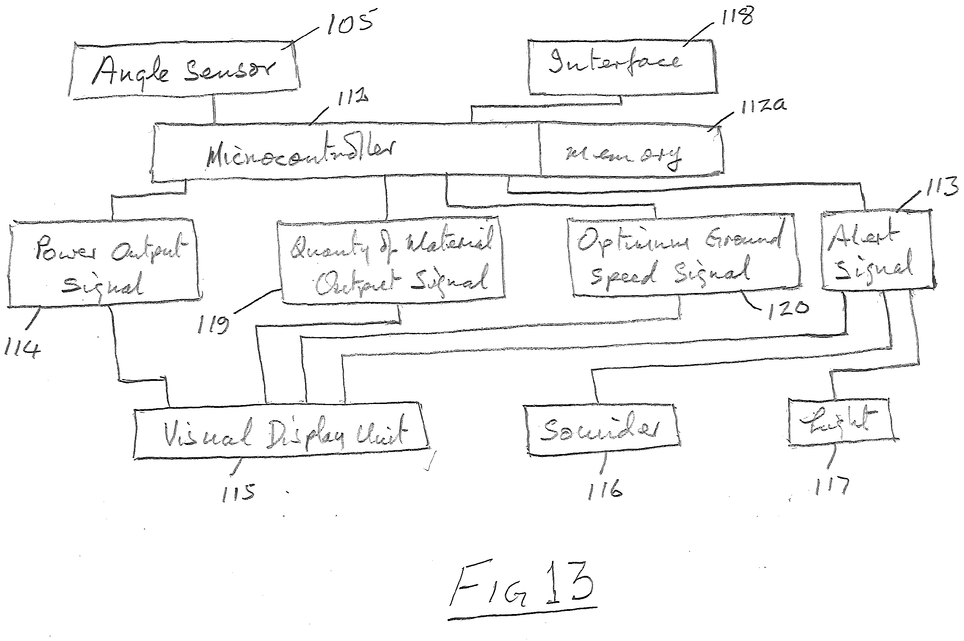

Referring now to Fig. 13 a signal processor is programmed to read the value of the signal produced by the angle sensor 105, to determine the power being drawn by the bale rotating rollers 17 to rotate the crop material, and to determine the quantity of crop material in the bale chamber 10, and to determine the optimum ground speed of the baler 2. The signal processor is also programmed to output signals indicative of the power being drawn by the bale rotating rollers 17, the quantity of material in the bale chamber 10 and the optimum ground speed of the baler 2. The signal processor comprises a microcontroller, which in this case comprises a microcontroller 112 which controls the operation of the baler/bale wrapper 1. The equations (1), (2), (3) and (4) are stored in memory 112a of the microcontroller 112 along with the values of the constants $m_1$ and $c_1$ and $m_2$ and $c_2$, and $c_3$, *a*, *b*, *c* and *d*. The derivation of the values of the constants $m_1$ and $c_1$, and $m_2$ and $c_2$, and $c_3$, *a*, *b*, *c* and *d* will be descried below. Since the equations (2), (3) and (4) are dependent on the moisture content ranges of the crop material being baled in the bale chamber 10, these three equations (2), (3) and (4) are stored in the memory 112a cross-referenced with the corresponding moisture content ranges of the crop material to which they relate.

An interface 118 is located on the baler for inputting data to the microcontroller 112 necessary to operate the baler, as will be understood by those skilled in the art. The interface 118 may be any suitable type of interface, for example, a touchscreen, a keypad, or any other suitable interface. In this embodiment of the invention the interface 118 comprises a touchscreen interface. The interface 118 is also configured to allow interrogation of the microcontroller 112 regarding the operation of the baler 2, as will be described below. The touchscreen interface 118, is also configured to enable inputting of the moisture content range of the type of material to be baled. The touchscreen displays three selectable moisture content ranges as follows:

DRY, MEDIUM and WET.

DRY moisture content as discussed above being moisture content of approximately 20% or less, MEDIUM moisture content being moisture in the range of approximately 40% to approximately 60% and WET moisture content being of moisture content of approximately 60% and greater.

Initially, the microcontroller 112 is programmed to calibrate the baler 2 by determining the value of the signal produced by the angle sensor 105 which corresponds to the datum position of the carrier arm 83. The datum position of the carrier arm 83 is determined as discussed above by operating the baler 2 in a no-load state, without any crop material in the bale chamber 10, and with the pick-up drum 29 and the transfer rotor 32 free of crop material. With the baler 2 operating in the no-load state, the value of the signal produced by the angle sensor 105 is read and stored in memory 112a of the microcontroller 112 as the calibrated datum value of the signal produced by the angle sensor 105 corresponding to the datum position of the carrier arm 83.

During normal operation of the combined baler/bale wrapper 1, the microcontroller 112 is programmed to read the value of the signal produced by the angle sensor 105 at predefined time intervals, in this case, 10 milliseconds intervals. Each time the value of the signal produced by the angle sensor 105 is read, the microcontroller 112 is programmed to determine the difference between the read value of the signal and the calibrated datum value thereof, and the microcontroller 112 is then programmed to determine the values of the power being drawn by the bale rotating rollers 17 by substituting the value of the difference between the value of the signal read from the angle sensor 105 and the calibrated datum value thereof for $x$ in the equation $y = m_1 x + c_1$. Each determined value of the power being drawn by the bale rotating rollers is time and date stamped and stored in the memory 112a of the microcontroller 112.

The microcontroller 112, each time the value of the power being drawn by the bale rotating rollers 17 is determined, is programmed to produce a signal 114 indicative of the current value of the power being drawn by the bale rotating rollers 17 which is suitable for applying to a visual display unit 115, which typically is a visual display unit comprising a visual display screen located in the cab of the tractor towing the combined baler/bale wrapper 1. The visual display unit 115 is configured to display the power currently being drawn by the bale rotating rollers 17, and on each signal 114 indicative of the power being drawn by the bale rotating rollers 17 produced by the microcontroller 112 being applied to the visual display unit 115, the current power being drawn by the bale rotating rollers 17 is updated and displayed on the visual display screen of the visual display unit 115. The value of the current power being drawn by the bale rotating rollers 17 may be displayed in text or in graphical forms or in both forms on the screen of the visual display unit 115.

The microcontroller 112, each time the current value of the power being drawn by the bale rotating rollers 17 is determined, is programmed to compare the current value of the power with a first threshold value. The first threshold value is stored in the memory 112a of the microcontroller 112 and is determined as a value of power over which the baler should be operated for short periods of time only, typically, during the final stages of the formation of a bale in the bale chamber 10. If the currently determined power value exceeds the first threshold value, the microcontroller 112 is programmed to commence timing of a first time period, and to continue timing the first time period until the current value of the power determined by the microcontroller 112 ceases to exceed the first threshold value. The time value of each first time period is time and date stamped and stored in memory in the microcontroller 112.

On storing the time value of each first time period, the stored time values of the first time periods are cumulatively summed, and the cumulative value of the summed time values of the first time periods is time and date stamped and stored in the memory 112a of the microcontroller 112. The cumulative value of the summed time values of the first time periods is also computed as a proportion of the total operating time of the combined baler/bale wrapper, which is also stored in the memory 112a of the microcontroller 112, time and date stamped.

Each time the determined value of the power being drawn by the bale rotating rollers 17 exceeds the first threshold value, the determined value of power is compared with a second threshold value which is stored in the memory 112a of the microcontroller 112. The value of the second threshold value is greater than the value of the first threshold value, and is determined as being a value of power over which the baler should only be operated for short time periods, shorter than the time periods during which the baler may be operated above the first threshold value.

If the current determined power value exceeds the second threshold value, the microcontroller 112 is programmed to commence timing of a second time period, and to continue timing the second time period until the current value of the determined power values ceases to exceed the second threshold value. The time value of each second time period is time and date stamped and stored in the memory 112a of the microcontroller 112. On storing the time value of each second time period, the time values of the second time periods are cumulatively summed, and the cumulative value of the summed time values of the second time periods is time and date stamped and stored in the memory 112a of the microcontroller 112. The microcontroller 112 is also programmed to compute the cumulatively summed time values of the second time periods as a proportion of the total operating time of the combined baler/bale wrapper, which is also stored in the memory 112a of the microcontroller 112, time and date stamped.

Each time the determined value of the power being drawn by the bale rotating rollers 17 exceeds the second threshold value, the microcontroller 112 is programmed to compare the determined power value with a third threshold value. The third threshold value is greater than the second threshold value and is stored in the memory 112a of the microcontroller 112. The third threshold value is a value of power over which the baler 2 should be operated for very short time periods only, and is a value which is the maximum safe value of the power which should be drawn by the bale rotating rollers 17 before a safety cut-out clutch would operate to disengage drive to the first output shaft 44.

On the current determined power value exceeding the third threshold value, the microcontroller 112 is programmed to commence timing a third time period, and to continue timing the third time period until the current determined value of the power ceases to exceed the third threshold value. The time value of each third time period is time and date stamped and stored in the memory 112a of the microcontroller 112. On the time value of each third time period being stored, the time values of the third time periods are cumulatively summed, and the cumulative value of the summed time values of the third time periods is time and date stamped and stored in the memory 112a of the microcontroller 112. The cumulative value of the summed time values of the third time periods is also computed as a proportion of the total operating time of the baler 2 and stored in the memory 112a of the microcontroller 112, time and date stamped.

Additionally, each time, and for so long as the determined power value exceeds the third threshold value, the microcontroller 112 is programmed to output an alert signal 113, which is adapted for applying to either or both a sounder 116 or a warning light 117, which may be mounted on the baler, or located in the cab of the tractor, or may be located in both the cab of the tractor and on the baler/bale wrapper 1 for alerting the driver of the tractor to the fact that the power being drawn by the bale rotating rollers 17 is such as to be at or above the maximum safe value of power which should be drawn by the bale rotating rollers 17. Additionally, the alert signal 113 may be adapted for applying to the visual display unit 115 to present a warning message on the visual display screen thereof to the driver of the tractor warning that the baler 2 is being operated at orabove the maximum safe operating power value.

Turning now to the determining of the quantity of crop material in the bale chamber 10, since the determining of the quantity of crop material in the bale chamber 10 is dependent on the moisture content of the crop material in the bale chamber 10, before commencing a baling session, the moisture content range, within which the material to be baled falls must be entered into the microcontroller 112 through the touchscreen interface 118. Once the moisture content has been entered into the microcontroller 112, the microcontroller 112 is programmed to select the appropriate one of the equations (2), (3) or (4). Each time the microcontroller 112 reads the value of the signal produced by the angle sensor 105 at the end of each predefined time interval of 10 milliseconds, the microcontroller 112 is programmed to also determine the quantity of crop material in the bale chamber 10 as a proportion of the capacity of the bale chamber 10 from the selected one of the equations (2), (3) or (4) by substituting the value of the signal read from the angle sensor 105 less the calibrated datum value thereof for the term $x$ in the selected one of the equations (2), (3) or (4). Each time the current quantity of crop material in the bale chamber 10 is determined, the microcontroller 112 is programmed to produce a quantity of material output signal 119 indicative of the current quantity of the crop material in the bale chamber 10 as a proportion of the capacity of the bale chamber 10. The quantity of material output signal 119 is applied to the visual display unit 115 and is configured to display the quantity of crop material in the bale chamber 10 as either or both a numerical value, or a graphical representation of the quantity of the material in the bale chamber. Each time a fresh quantity of material output signal 119 is applied to the visual display unit 115, the display on the visual display screen thereof of the current value of the quantity of crop material in the bale chamber 10 is updated for viewing by the tractor driver.

The tractor driver can then determine when the formation of the bale in the bale chamber 10 is completed from the displayed data on the visual display screen of the visual display unit 115 of the quantity of material in the bale chamber 10.

Turning now to the determining of the optimum ground speed at which the baler 2, and in turn the combined baler/bale wrapper 1 should be driven, in order to optimise between power being drawn by the bale rotating rollers 17, and the rate at which the crop material is being fed into the baler 10. Each time the value of the signal is read from the angle sensor 105 and the current quantity of crop material in the bale chamber has been determined, the optimum ground speed of the baler2 is determined from the following equation number 5:

$$s_0 = \frac{\Delta Q_0}{\Delta Q_c} s_c \quad \text{................................................} (5)$$

where $s_0$ is the optimum ground speed of the baler,

$\Delta Q_0$ is the optimum rate at which crop material should be delivered into the bale chamber 10,

$\Delta Q_c$ is the current rate at which crop material is being delivered into the bale chamber 10, and

$s_c$ is the current ground speed of the baler.

The value of $\Delta Q_0$ which is the optimum rate at which the crop material is to be delivered into the bale chamber 10 is determined by calibration as will be described below. The optimum value of $\Delta Q_0$ will vary depending on the type of crop material being baled in the bale chamber 10. Additionally, three values of $\Delta Q_0$ are determined for each of the three types of crop materials. These three values of $\Delta Q_0$ which are determined for each type of crop material are based on three different time periods required for a bale forming cycle, namely, a long time period when the baler is operated in a slow time mode, a short time period when the baler is operated in a fast time mode, and a normal time period when the baler is being operated in a normal time mode. The slow time mode is a time mode based on a conservative operation of the baler 2 in orderto maximise the life of the baler. The normal time mode is based on a normal operation of the baler 2 which would result in a normal life of the baler. The fast time mode is based on an aggressive operation of the baler which would result in shortening of the life of the baler. Accordingly, since the relationship between the quantity of crop material in the bale chamber 10 and the value of the signal produced by the angle sensor 105 is dependent on the three ranges of the moisture content of the crop material, three values of $\Delta Q_0$ for each of the three time modes are determined during calibration for each of the three ranges of moisture content of crop materials.

The equation (5) is stored in the memory 112a of the microcontroller 112 along with nine calibration values of $\Delta Q_0$, three values of $\Delta Q_0$ based on the three respective time modes to produce a bale, namely, slow, fast and normal time modes, for each of the three ranges of moisture content of crop material.

After entering the moisture content range of the crop material to be baled to the microcontroller 112 through the touch screen interface 118 by selecting one of the moisture content ranges dry, medium or wet, the desired operating time mode to produce each bale is inputted to the microcontroller 112 through the touchscreen 118 by selecting one of the three time modes, namely the slow time mode, the fast time mode or the normal time mode. The microcontroller 112 is programmed to select the appropriate stored value of $\Delta Q_0$ from the memory 112a and insert it into equation (5) on the moisture content range of the crop material to be baled and the desired one of the slow, fast or normal time modes being entered into the microcontroller 112.

The microcontroller 112 is programmed so that on the value of the crop material currently in the bale chamber having been determined from the just read value of the signal produced by the angle sensor 105, the microcontroller 112 determines the rate at which the crop material is being delivered into the bale chamber 10 by subtracting the previous determined value of crop material in the bale chamber from the currently determined value of crop material in the bale chamber 10, to produce the value of $\Delta Q_0$. Since the value of the signal produced by the angle sensor 105 is being read at constant predefined time intervals of 10 milliseconds, and since the calibration values of $\Delta Q_0$ are also determined at predefined time intervals of 10 milliseconds, there is no need for the microcontroller 112 to divide the difference between the currently determined value of crop material in the bale chamber and the previously determined value of quantity of crop material in the bale chamber in order to rate at which the crop material is being delivered into the bale chamber.

The microcontroller 112 is programmed to read a signal indicative of the current speed of the tractor towing the combined baler/bale wrapper 1 from the ISOBUS of the tractor at the predefined time intervals of 10 milliseconds as the signal produced by the angle sensor 105 is being read. The microcontroller 112 is programmed to then determine the value of the optimum ground speed of the baler from equation (5), now containing the appropriate value of $\Delta Q_0$, by substituting into equation (5) the current ground speed of the baler and the current rate at which the crop material is being delivered into the bale chamber 10.

On determining the optimum ground speed of the baler, the microcontroller 112 is programmed to output a signal 120 which is indicative of the currently determined optimum ground speed of the baler 2. The optimum ground speed signal 120 is applied to the visual display unit 115 which is configured to display the value of the current optimum ground speed of the baler 2 on the visual display screen thereof. The driver of the tractor may then alter the speed at which the combined baler/bale wrapper 1 is being towed to the optimum ground speed if the tractor is not being currently driven at the optimum ground speed of the baler 2. Each time the microcontroller 112 outputs the current optimum ground speed signal 120 to the visual display unit 115, the optimum ground speed of the baler displayed on the visual display screen thereof is updated.

In some embodiments of the invention the signal indicative of the current optimum ground speed of the baler outputted by the microcontroller 112, may be adapted for applying to a speed controller of the tractor for controlling the speed of the tractor, and each time the current optimum ground speed of the baler 2 is determined, the signal indicative of the currently determined optimum ground speed of the baler would be applied by the microcontroller 112 to the speed controller of the tractor, so that the speed of the tractor would be maintained at the optimum ground speed.

Turning now to the determining of the calibration values of the constants $m_1$, $c_1$, $m_2$, $c_2$, $c_3$, $a$, $b$, $c$ and $d$ and the calibration of the values of the optimum rate at which the crop material is being delivered into the bale chamber 10, namely, $\Delta Q_0$, the calibration values are calibrated in a standard balerwhich is identical to the baler 2 operating in "in-field" conditions through a large number of bale forming cycles, during which a plurality of bales of different types of crop material are produced by the standard baler, one bale being produced during each bale forming cycle. The standard baler is provided with a microprocessor for determining the calibration values. A suitable torque monitoring instrument is fitted to the standard baler for monitoring the torque being transmitted through the first output shaft from the gearbox of the standard baler to the bale rotating rollers of the standard baler. The torque monitoring instrument produces a signal indicative of the torque being drawn by the first and second driven sprockets of the standard baler and in turn by the bale rotating rollers thereof.

As discussed above, the relationship between the power being drawn by the bale rotating rollers of the baler 2 and also by the bale rotating rollers of the standard baler to rotate the crop material in the bale chamber thereof, and the angular displacement of the carrier arm of the tensioning unit about the main pivot axis from the datum position is independent of the type of crop material being baled, but the relationship between the quantity of crop material in the bale chamber and the angular displacement of the carrier arm about the main pivot axis from the datum position is dependent on the type of crop material being baled. Accordingly, the calibration values of the constants $m_1$ and $c_1$ of equation (1) may be determined by the standard baler with any type of crop material. However, the calibration values of the constants $m_2$, $c_2$, $c_3$, $a$, $b$, $c$, $d$ and $\Delta Q_0$ of equations (2) to (5) must be determined by the standard baler for crop material within the three ranges of moisture content, namely, crop materials of moisture content of approximately 40% and less, crop materials of moisture content in the range between approximately 40% and approximately 60% and crop materials of moisture content of approximately 60% and greater. In this embodiment of the invention as discussed above, the calibration values of the constants $m_2$ and $c_2$ of equation (2) are determined by baling crop material of a medium moisture content, namely, haylage in the standard baler, the calibration value of the constant $c_3$ of equation (3) is determined by baling crop material of a high moisture content, in this case, grass silage in the standard baler, and the calibration values of the constants a, $b$, $c$ and $d$ of equation (4) are determined by baling dry crop material of a low moisture content, namely, wheat straw in the standard baler. Since the constants $m_1$ and $c_1$ of equation (1) are independent of the crop material being baled, the calibration values of the constants $m_1$ and $c_1$ of equation (1) may be determined in the standard baler when determining the calibration values of the relevant constants for any of the three crop materials of the three different moisture contents. Since grass silage is a commonly available material, the standard baler is operated initially to determine the calibration values of $m_1$, $c_1$ and $c_2$ of equations (1) and (3) as well as the calibration values of the three optimum rates of delivery of crop material $\Delta Q_0$ of equation (5) for grass silage.

Initially, the datum position of the carrier arm of the tensioning unit of the standard baler is determined by operating the standard baler in a no-load state without any crop material in the bale chamber, and the pick-up rotor and the transfer rotor also free of crop material. With the standard baler operating in the no-load state, the signal produced by the angle sensor, similar to the angle sensor 105 of the baler 2, is read by the microprocessor of the standard baler and stored in the memory of the microprocessor as the calibrated datum value of the signal produced by the angle sensor corresponding to the datum position of the carrier arm of the tensioning unit of the standard baler.

To determine the calibration values of $m_1$, $c_1$

and $c_3$ for equations (1) and (3) and to determine the calibration values of the optimum rate at which crop material should be delivered into the bale chamber, namely, $\Delta Q_0$ for equation (5), the standard baler is drawn at a constant known speed sequentially over a plurality of windrows of the grass silage. The windrows of the crop material are of substantially constant width, substantially constant depth and substantially constant density, so that the quantity of crop material in the bale chamber during each bale forming cycle and the rate at which the crop material is being delivered into the bale chamber of the standard baler can be determined as a function of the ground speed of the standard baler, and the elapsed time from the commencement of delivery of crop material into the bale chamber for each bale forming cycle. The microprocessor of the standard baler at the predefined time intervals of 10 milliseconds, reads the values of the signal produced by the torque monitoring instrument and the corresponding values of the signal produced by the angle sensor indicative of the angular displacement from the datum position of the carrier arm of the tensioning unit of the standard baler, as well as the value of the signal from the ISOBUS of the tractor towing the standard baler, which is indicative of the ground speed of the standard baler. As each value of the signal is read from the angle sensor, the value is corrected by deducting the calibrated datum value of the signal from the value of the signal read from the angle sensor, so that the corrected values of the signal read from the angle sensor are referenced to the datum value of the signal being zero.

As each set of values are read from the torque monitoring instrument, the angle sensor and the ISOBUS of the tractor, the corrected values of the signal read from the angle sensor and the corresponding values of the signals read from the torque monitoring instrument and from the ISOBUS are stored and cross-referenced and time and date stamped in the memory of the microprocessor for subsequently determining the calibration values of $m_1$, $c_1$ and $c_3$ for equations (1) and (3) and the calibration values of $\Delta Q_0$ for equation (5) The microprocessor is programmed to compute the value of the power being drawn by the bale rotating rollers of the standard balerfrom each value of the signal read from the torque measuring instrument each time the value of the signal is read from the torque measuring instrument. Each computed value of the power is time and date stamped, stored and cross-referenced with the corresponding set of stored values of the signals.

Additionally, as each set of values of the signals is read from the torque monitoring instrument, the angle sensor and the ISOBUS, the quantity of crop material delivered into the bale chamber of the standard baler from the commencement of the current bale forming cycle is computed by multiplying the cross-sectional area of the windrows of the crop material by the density of the windrow of the crop material and by the distance travelled by the baler from the commencement of that current bale forming cycle. On each value of the quantity of the crop material delivered into the bale chamber of the standard baler being computed, the computed value of the quantity of the crop material is time and date stamped and stored and cross-referenced with the corresponding set of the values of the signals.

At the end of the calibration process when a sufficient number of bales have been formed, the values of $m_1$ and $c_1$ are determined for equation (1) by curve fitting in which the stored and cross-referenced computed values of the power drawn by the bale rotating rollers are substituted for the term "$y$" and the corresponding stored and cross-referenced corrected values of the signal read from the angle sensor are substituted for the term "$x$" in the equation (1) The value of $c_3$ for equation (3) is determined by curve fitting in which the stored and cross-referenced values of the computed values of the quantity of crop material delivered into the bale chamber are substituted for the term "$y$" and the corresponding stored and cross-referenced corrected values of the signal read from the angle sensor are substituted for the term "$x$" in equation (3) for grass silage. The determined calibration values of the constants $m_1$ and $c_1$ of equation (1) are stored in the memory of the microprocessor of the standard baler along with equation (1) and the calibration value of the constant $c_3$ along with equation (3) are also stored in the memory of the standard baler.

The three optimum calibration values of the optimum rate at which the crop material should be delivered into the bale chamber, namely, the calibration values of $\Delta Q_0$ for equation (5) for grass silage are then determined The three calibration values of $\Delta Q_0$ are determined based on the three time periods required to produce a bale of grass silage, namely, the long time period based on the slow operating time mode, the short time period based on the fast operating time mode and the normal time period based on the normal operating time mode. The calibration values of $\Delta Q_0$ along with equation (5) are stored in the memory of the microprocessor of the standard baler.

The first, second and third threshold values are determined based on the cut-out power value at which the overload protection clutch cuts out located in the driveline to the gearbox of the standard baler. The gearbox of the standard baler and the overload protection clutch of the standard baler are similar to the gearbox 40 and the overload protection clutch, respectively, in the baler 2. The third threshold value is selected to be sufficiently below the power value at which the overload protection clutch cuts out in order to avoid the risk of the driveline through the overload protection clutch being broken. The first threshold value is determined as being a power value drawn by the bale rotating rollers should ideally not exceed. The second threshold value is selected to lie substantially midway between the first and the third threshold values. Once the first, second and third threshold values have been determined, they are stored in the memory of the microprocessor of the standard baler.

In order to determine the calibration values for the constants $m_2$ and $c_2$ of equation (2) for crop material of medium moisture content, and to determine the calibration values of the optimum rate of delivery of crop material into the bale chamber, namely, $\Delta Q_0$ of equation (5) for the crop material of medium moisture content, the standard baler is operated to bale haylage, in a similar manner as described with reference to determining the values of $m_1$, $c_1$, $c_3$ and $\Delta Q_0$ for grass silage. The haylage is arranged in elongated windrows of substantially constant width, substantially constant depth and substantially constant density. The standard baler is drawn along the windrows at constant speed as already described with reference to grass silage. At the predefined time intervals of 10 milliseconds, the microprocessor of the standard baler reads the values of the signal produced by the torque monitoring instrument and determines the power being drawn by the bale rotating rollers, and the microprocessor at the predefined time intervals of 10 milliseconds reads the values of the signal from the angle sensor, and the current speed at which the baler is being drawn along the windrows of the haylage from the ISOBUS of the tractor towing the standard baler. At the predefined time intervals of 10 milliseconds, the quantity of haylage in the baler is determined from the speed of the tractor as described with reference to the operation of the standard baler with grass silage.

With all the relevant values stored in the memory of the microprocessor of the standard baler, cross-referenced and time stamped at the end of the calibration process, the calibration values of $m_2$ and $c_2$ are determined by curve fitting by substituting the computed values of the quantity of crop material in the bale chamber for $y$ and the corresponding value of the signal read from the angle sensor for $x$ in equation (2). The three values of $\Delta Q_0$ for haylage are determined in a similar manner as described with reference to determining the three values of $\Delta Q_0$ for grass silage.

The determined calibration values of $m_2$ and $c_2$ along with equation (2) as well as the three optimum calibration values of $\Delta Q_0$ along with equation (5) for haylage are stored in the memory of the microprocessor of the standard baler.

To determine the calibration values for the constants $a$, $b$, $c$, $d$ and $e$ of equation (4) for crop material of a low moisture content, the standard baler is operated to bale wheat straw in a similar manner as described above for determining the calibration values of the constants $m_1$ and $c_1$ of equation (1) and the calibration values of the constant $c_3$ of equation (3), and the calibration values of the optimum rate of delivery of crop material into the bale chamber, namely $\Delta Q_0$ for equation (5) for grass silage. The standard baler is drawn along a plurality of elongated windrows of wheat straw of substantially constant width, substantially constant depth and substantially constant density at constant speed. The standard baler is operated in a similar manner as described with reference to grass silage, and the calibration constants $a$, $b$,

*c, d* and the optimum value of the rate at which the wheat straw should be delivered into the bale chamber are determined by curve fitting by substituting the values of the quantity of crop material in the bale chamber for the term "*y*" and the corresponding values of the signal read from the angle sensor for the term "x" in equation (4). The calibration values of $\Delta Q_0$ of equation (5) are similarly determined for hay silage.

The determined calibration values of the constants *a, b, c* and *d* along with equation (4) as well as the three optimum values of $\Delta Q_0$ along with equation (5) for wheat straw are stored in the memory of the microprocessor of the standard baler.

On the calibration constants for the equations (1) to (5) having been completed and the equations (1) to (5) along with the calibration constants thereof stored in the memory of the microprocessor of the standard baler and the first, second and third threshold values also stored in the memory of the microprocessor of the standard baler, the calibration process is completed. Equations (1) to (5) with the calibration values of the constants thereof, as well as the first, second and third threshold values are then downloaded from the memory of the standard baler into the memory 112a of the microcontroller 112 of the baler 2, and are also downloaded into the memory of the microcontrollers of balers similar to the standard baler and to the baler 2.

In use, with equations (1) to (5) stored in the memory 112a of the microcontroller 112 and the first, second and third threshold values also stored in the memory 112a of the microcontroller 112, the combined baler/bale wrapper 1 is ready for use. The combined baler/bale wrapper 1 is hitched to a prime mover, for example, a tractor as discussed above. The power take-off shaft of the tractor is connected to the input shaft 42 of the gearbox 40 of the combined baler/bale wrapper 1 by a Cardan shaft for mechanically powering the combined baler/bale wrapper 1. The hydraulic system of the combined baler/bale wrapper 1 is connected to the hydraulic system of the tractor for powering the hydraulics of the combined baler/bale wrapper 1, as will be understood by those skilled in the art.

The operator of the combined baler/bale wrapper 1, namely, the driver of the tractor, enters the type of crop material to be baled through the touchscreen interface 118 by selecting the appropriate one of dry, medium or wet moisture content displayed on the touchscreen interface 118. The driver of the tractor also selects the desired operating time mode for the bale forming cycles at which the baler 2 is to operate for producing the bales from the three operating time modes, namely, the slow, fast or normal operating time modes. The selected operating time mode is entered into the microcontroller 112 through the touchscreen interface 118.

With the combined baler/bale wrapper 1 powered up, and the baler 1 operating in the no-load state, the microcontroller 112 determines the calibrated datum value of the signal produced by the angle sensor 105.

The calibrated datum value of the signal produced by the angle sensor 105 is stored in memory 112a of the microcontroller 112, so that the calibrated datum value can be subtracted from the values of the signal subsequently read from the angle sensor 105 to produce difference values which are referenced to the datum value of the signal produced by the angle sensor 105 being zero.

As the combined baler/bale wrapper 1 is towed by the tractor over windrows of the crop material at the end of each predefined time interval of 10 milliseconds, from the commencement of each bale forming cycle, the microcontroller 112 reads the current value of the signal from the angle sensor 105 and the current value of the speed of the tractor. At the end of each predefined time interval, the power currently being drawn by the bale rotating rollers 17 of the baler 2 is determined from equation (1) Depending on the crop material being baled, the microprocessor determines the quantity of material in the bale chamber 10 from the appropriate one of equations (2) to (4) at the end of each predefined time interval of 10 milliseconds. Additionally, at the end of each predefined time interval of 10 milliseconds, the microcontroller 112 computes the optimum ground speed for the baler 2 from equation (5) for the relevant crop material and the selected operating time mode.

As each value of power being drawn by the bale rotating rollers 17 is determined, the current quantity of crop material in the bale chamber 10 is determined, and the optimum ground speed of the baler is determined, the power output signal 114, the quantity output signal 119 and the optimum ground speed signal 120 are outputted by the microcontroller 112 and applied to the visual display unit 115 in the cab of the tractor where they are displayed for the driver of the tractor.

The time values of the first, second and third time periods during which the power being drawn by the bale rotating rollers 17 of the baler 2 exceeds the first, second and third threshold values are also computed, time and date stamped and stored in the memory 112a of the microcontroller 112. The time values of the respective first, second and third time periods are cumulatively summed, time and date stamped and stored in the memory 112a, and the cumulative summed values of the respective first, second and third time periods are computed as proportions of the total operating time of the baler, and are time and date stamped and stored in the memory 112a of the microcontroller 112.

In the event of the microcontroller 112 determining that the power being drawn by the bale rotating rollers 17 of the bale chamber 10 exceeds the third threshold value, the microcontroller 112 outputs the alert signal 113, which in turn is applied to the sounder 116 and the warning light 117, and is also applied to the visual display unit 115 in order to warn the driver of the need to reduce the power being drawn by the bale rotating rollers 17.

Since the quantity of crop material in the bale chamber 10 is continuously updated on the visual display unit 115, when the quantity of crop material in the bale chamber 10 has reached the desired quantity to which the bale is to be formed, the driver of the tractor can then take the appropriate action and operate the baler 2 to circumferentially wrap the bale in the bale chamber 10, as will be well known to those skilled in the art. On completion of circumferential wrapping of the bale in the bale chamber 10, the bale is then transferred to the bale wrapper 4 for end-to-end wrapping thereof. While the bale is being wrapped on the bale wrapper 4, the tractor is again operated to tow the combined baler/bale wrapper 1 over the windrow of the crop material and the formation of the next bale is then commenced, and so operation of the combined baler/bale wrapper 1 continues. At appropriate times, the microcontroller 112 may be interrogated through the interface 118 in order to obtain particulars of the operation of the baler in order to determine when servicing of the baler is next due and when replacement of the main drive chain 53 and/or other components of the transmission system of the baler 2 is also due.

When the microcontroller determines as a result of the operating time period of the combined baler/bale wrapper from the last service and also based on the cumulative values of the first, second and third time periods during which the power being drawn by the bale rotating rollers exceeded the first, second and third threshold values, the microcontroller 112 produces a signal for display on the visual display unit 115 in the cab of the tractor informing the tractor driver that the combined baler/bale wrapper 1 is due for a service.

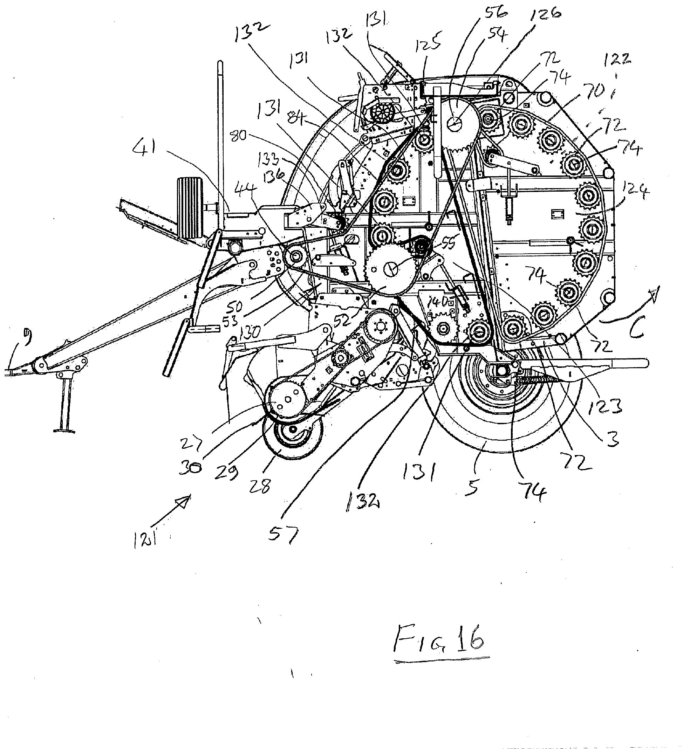

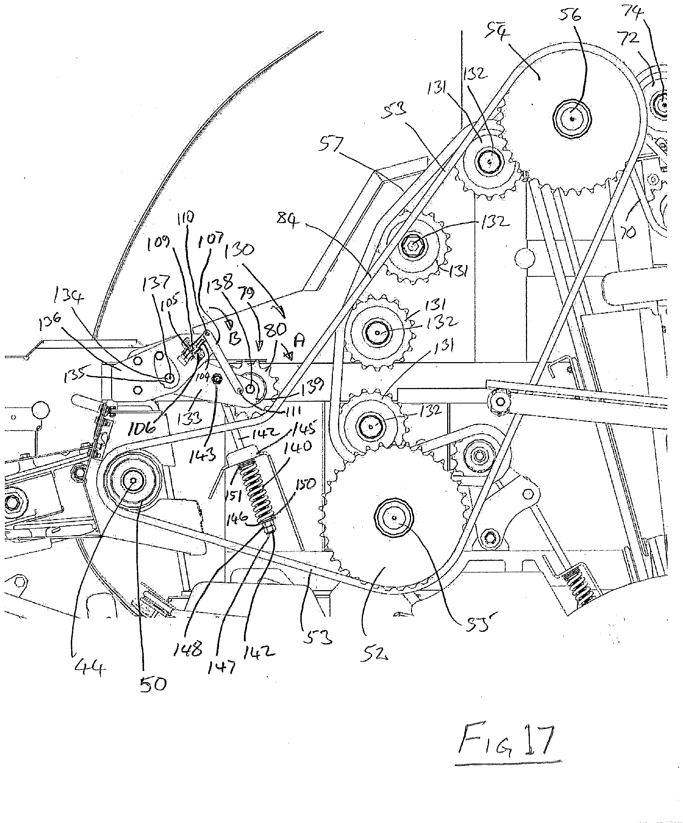

Referring now to Figs. 16 and 17, there is illustrated a fixed chamber baler also according to the invention and indicated generally by the reference numeral 121. The fixed chamber baler 121 is substantially similar to the fixed chamber baler 2 of the combined bale wrapper 1, and similar components are identified by the same reference numerals. The main difference between the baler 121 and the baler 2 of the combined baler/bale wrapper 1 lies in the configuration of the bale chamber 122. The bale chamber 122 of the baler 121 does not include a tipping segment, and only includes a fixed segment 123 and a closure segment 124. The tipping segment 14 and the fixed segment 15 of the baler 2 are combined in the baler 121 to form the single fixed segment 123. The closure segment 124 is substantially similar to the closure segment 15 of the baler 2, with the exception that it is pivotally coupled to the fixed segment 123 adjacent an upper end 125 thereof about an upper pivot axis 126. The closure segment 124 is pivotal upwardly rearwardly about the upper pivot axis 126 in the direction of the arrow C from a closed bale forming state illustrated in Figs. 16 and 17 to an open state not illustrated for discharging a formed bale from the bale chamber 122. Such fixed chamber balers will be well known to those skilled in the art and further description should not be required.

Turning now to the driving of the bale rotating rollers 17, a drive transmission system 130 similar to the drive transmission system 49 of the baler 2 transmits drive from the first output shaft 44 of the gearbox 40. In this embodiment of the invention the drive transmission system 130 comprises a driving sprocket 50 fast on the first shaft 44 of a gearbox (not shown), but which is similar to the gearbox 40 of the baler 2, first and second driven sprockets 52 and 54, and a main drive chain 53. The first driven sprocket 52 is mounted fast on a first transmission shaft 55 similar to the first transmission shaft 55 of the baler 2. The second driven sprocket 54 is mounted fast on a second transmission shaft 56 similar to the second transmission shaft 56 of the baler 2. The main drive chain 53 is substantially similar to the main drive chain 53 of the baler 2 and extends around and cooperates with the driving sprocket 50 and the first and second driven sprockets 52 and 54 for transmitting drive from the driving sprocket 50 to the first and second driven sprockets 52 and 54.

A first chain drive transmission 57 comprising a first transmission sprocket (not shown) mounted fast on the first transmission shaft 55 transmits power from the first transmission shaft 55 to sprockets 131 on shafts 132 of the bale rotating rollers (not shown) of the fixed segment 123.

In this embodiment of the invention the second chain drive transmission is not required. A third chain drive transmission 70 comprising a third transmission sprocket (not shown) fast on the second transmission shaft 56 transmits power from the second transmission shaft 56 to sprockets 72 on shafts 74 of the bale rotating rollers (not shown) of the closure segment 124.

A tensioning unit 79 for tensioning the slack leg 84 of the main drive chain 53 comprises a pivotally mounted carrier arm 133, which is substantially similar to the pivotally mounted carrier arm 83, of the baler 2 is mounted fast on a pair of main pivot shafts 134 similar to the main pivot shafts 85 of the carrier arm 83, which pivotally engage pivot bores 135 in respective spaced apart mounting plates 136, similar to the mounting plates 87 of the baler 2, see Fig. 17. The mounting plates 136 are rigidly secured to the chassis 3. The main pivot shafts 134 define a main pivot axis 137 about which the carrier arm 133 is pivotal. A tensioning sprocket 80, similar to the tensioning sprocket 80 of the baler 2, is rotatably carried on a shaft 138 adjacent a distal end 139 of the carrier arm 133, and is engageable with the slack leg 84 of the main drive chain 53 for tensioning thereof.

An urging means, which in this embodiment of the invention comprises a compression spring 140 urges the carrier arm 133 about the main pivot axis 137 in the direction of the arrow A, for in turn urging the tensioning sprocket 80 into engagement with the slack leg 84 of the main drive chain 53. An elongated threaded adjusting rod 142 is pivotally coupled to the carrier arm 133 by a pivot pin 143. The threaded adjusting rod 142 extends from the carrier arm 133 and passes freely through a bore (not shown) in an anchor bracket 145 rigidly secured to the chassis 3 of the baler 121, and then through the compression spring 140. A pair of threaded nuts 148 located on the threaded adjusting rod 142 adjacent a distal end 147 thereof engage a first end 150 of the compression spring 140 through a washer 146, and retain the compression spring 140 captive on the threaded adjusting rod 142 between the anchor bracket 145 and the washer 146 with the first end 150 of the compression spring 140 engaging the washer 146 and a second end 151 of the compression spring 140 abutting the anchor bracket 145. The force with which the tensioning sprocket 80 of the carrier arm 133 of the tensioning unit 79 is urged into engagement with the slack leg 84 of the main drive chain 53 is adjusted by urging the nuts 148 along the threaded adjusting rod 142 for compressing or extending the compression spring 140.

An angle sensor 105, similar to the angle sensor 105 of the baler 2, is secured to the outer one of the mounting plates 136 in a similar manner to that in which the angle sensor 105 is secured to the outer one of the two mounting plates 87 of the baler 2. An arm 104 of the angle sensor 105 is coupled to the carrier arm 133 by a link member 107, similar to the link member 107 of the baler 2, and in a similar manner as the link member 107 of the baler 2 couples the arm 104 of the angle sensor 105 to the carrier arm 83.

A signal processor (not shown) of the baler 121, which is similar to the microcontroller 112 of the combined baler/bale wrapper 1 also comprises a memory similar to the memory 112a of the microcontroller 112. Equations in a similar form to equations (1) to (5), as well as the calibration values of the constants $m_1$, $c_1$, $m_2$, $c_2$, $c_3$, $a$, $b$, $c$, $d$ and $\Delta Q_0$ are stored in the memory of the microcontroller of the baler 121. The first, second and third threshold values are also stored in the memory of the microcontroller of the baler 121.

The calibration values of the constants $m_1$, $c_1$, $m_2$, $c_2$, $c_3$, $a$, $b$, $c$, $d$ and $\Delta Q_0$ are determined from a standard baler identical to the baler 121 in a similar manner as the corresponding calibration values of the equations (1) to (5) of the baler 2 are determined from the standard baler identical to the baler 2, and are stored along with the equations (1) to (5) in the memory of the microprocessor of the standard baler identical to the baler 121. The first, second and third threshold values for the baler 121 are also determined from the standard baler identical to the baler 121 and stored in the memory of the microprocessor thereof.

The equations (1) to (5) together with the calibration values of the constants $m_1$, $c_1$, $m_2$, $c_2$, $c_3$, $a$, $b$, $c$, $d$ and $\Delta Q_0$ as well as the first, second and third threshold values, are downloaded from the memory of the microprocessor of the standard baler identical to the baler 121 to the memory of the microcontroller of the baler 121, and are also downloaded to any other baler identical to the standard baler identical to the baler 121 subsequently produced.

During use of the baler 121, the microcontroller thereof reads signals from the angle sensor 105 indicative of the angular displacement of the carrier 133 from its no-load datum position as already described with reference to the combined baler/bale wrapper 1, and reads signals from the ISOBUS of the tractor towing the baler indicative of the ground speed of the baler 121. The microcontroller is programmed in a similar manner as the microcontroller 112 of the combined baler/bale wrapper 1 is programmed, and in use, at the end of each predefined time interval of 10 milliseconds, the microcontroller determines the power currently being drawn by the bale rotating rollers 17 of the bale chamber 122 and determines the current quantity of crop material in the bale chamber 122. Additionally, the microcontroller of the baler 121 at the end of each predefined time interval of 10 milliseconds also determines the optimum ground speed of the baler 121 as described with reference to the microcontroller 112 of the combined baler/bale wrapper 1. The microcontroller of the baler 121 also carries out the functions of comparing each determined value of the power being drawn by the bale rotating rollers 17 of the bale chamber 122 with the first, second and third threshold values, and timing the first, second and third time periods as well as cumulatively summing the respective first, second and third time periods, and computing each of the cumulative values of the first, second and third time periods as respective proportions of the total operating time of the baler 121.

Otherwise, the baler 121 and its use is similar to that of the baler 2 of the combined baler/bale wrapper 1.

Additionally, the microcontrollers of the baler/bale wrapper 1 and/or the baler 121 may be programmed to compare the determined value of the quantity of crop material currently in the bale chamber with a selectable desired quantity of crop material to which the bale is to be formed, and on the determined value of the quantity of crop material currently in the bale chamber reaching the desired quantity of material, the microcontroller would be programmed to produce an alert signal indicative of the completion of the formation of the bale in the bale chamber, which in turn would be applied to the visual display unit in the cab of the tractor towing the baler 121, and also to a sounder and/or a warning light in the cab of the tractor towing the baler/bale wrapper 1 or on the baler 121 to produce an audio alert and a visual alert to the driver, alerting the driver to the fact that the formation of the bale in the bale chamber is complete, and the formed bale is ready for circumferential wrapping in the bale chamber. It is also envisaged that the alert signal indicative of the completion of the formation of the bale in the bale chamber may be applied to the circumferential wrapping system for initiating circumferentially wrapping the formed bale in the bale chamber, and on completion of circumferential wrapping of the bale, the circumferentially wrapped bale would be automatically discharged from the bale chamber, in the case of the baler/bale wrapper 1 the circumferentially wrapped bale would be discharged by the tipping segment onto the bale wrapper 4, and in the case of the baler 121 the bale would be discharged by urging the closure segment into the open state. The desired quantity of material with which a bale is to be formed in the bale chamber would be selectable, and would be entered into the microcontroller through the interface 118.

While the drive transmission system transmitting power to the bale rotating rollers has been described as comprising a chain drive transmission system, it is envisaged that the drive transmission system transmitting power to the bale rotating rollers may be provided as a belt drive transmission system, in which case, the main drive chain would be replaced by a drive belt, and the driving sprocket and the first and second driven sprockets 50, 52 and 54 would be replaced by suitable driving and driven pulleys. Similarly, the tensioning sprocket would be replaced by a tensioning pulley engageable with the drive belt. Indeed, in some embodiments of the invention it is envisaged that the tensioning means may comprise a skid element which would slideably engage the main drive chain or drive belt, as the case may be, of the drive transmission system.

It will also be appreciated that while it is advantageous to couple the arm of the angle sensor 105 to the carrier arms 83 and 133 through a link member, this is not essential, and in some embodiments of the invention the arm of the angle sensor may be pivotally connected directly to the carrier arm It is further envisaged that the arm 104 of the angle sensor may be connected directly to the carrier arm.

While the balers described with reference to the drawings have been described as comprising fixed chamber balers, the baler according to the invention may be a belt baler, or a baler comprising a combination of bale rotating rollers and belts defining the bale chamber. Needless to say the baler/bale wrapper which has been described with reference to Figs. 1 to 15 may be provided without the bale wrapper.

Additionally, instead of storing the relevant equations and calibration values of the constants in the memory of the microcontroller, a suitable separate memory may be provided accessible to the microcontroller.

While the microcontrollers of the combined baler/bale wrapper 1 and the baler 121 have been described as being programmed to determine the power being drawn by the bale rotating rollers, and the quantity of material currently in the bale chamber, as well as the current optimum ground speed of the baler from the equations described above, it is envisaged that in some embodiments of the invention the microcontroller may be programmed to determine the power currently being drawn by the bale rotating rollers, the current quantity of material in the bale chamber and the current optimum ground speed of the baler from suitable look-up tables stored in memory of the microcontroller or accessible to the microcontroller. Such look-up tables would be determined empirically from the relevant standard baler operating in "in-field" conditions, whereby during operation of the standard baler, at the end of the predefined time intervals during each bale forming cycle as a bale is being produced in the relevant standard baler, the values of the signal produced by the angle sensor or other suitable monitoring means monitoring the angular displacement of the tensioning means from a datum position would be recorded and cross-referenced with the corresponding values of the power currently being drawn by the bale rotating rollers read from the torque monitoring instrument, and each cross-referenced pair of the value of the signal read from the angle sensor and the power value read from the torque monitoring instrument would be stored and cross-referenced in the look-up table. At the end of each predefined time interval the current quantity of crop material delivered to the bale chamber from the commencement of the bale forming cycle would also be determined as already described with reference to the standard baler, and the determined current quantity of crop material in the bale chamber of the relevant standard baler would be stored and cross-referenced with the corresponding value of the signal read from the angle sensor in the look-up table, as would the corresponding value of the ground speed of the baler be stored and cross-referenced in the look-up table with the corresponding value of the signal read from the angle sensor. The optimum ground speed values of the relevant standard baler would be determined and stored.

While the urging means for urging the tensioning means into engagement with the drive transmission chain has been described as comprising a tension spring in the case of the baler 2 and a compression spring in the case of the baler 121, any other suitable urging means may be provided, for example, a torsion spring, a pneumatic spring, a hydraulic spring or any other suitable urging means.

While the predefined time interval between which the values of the signals from the angle sensor 105 and the signal indicative of the speed of the baler has been described as being of time duration of 10 milliseconds, it will be readily apparent to those skilled in the art that the predefined time interval between which the values of the signals produced by the angle sensor and the signal indicative of the speed of the baler are read by the microcontroller, may be of any other suitable time duration.

While the monitoring means for monitoring the angular displacement of the carrier arm has been described as comprising an angle sensor, any other suitable monitoring means may be provided. In some embodiments of the invention a simple proximity sensor may be sufficient, and in other cases a potentiometer may be provided for determining the angular displacement of the carrier arm about the pivot mounting, indeed in some embodiments of the invention the monitoring means may comprise an inclinometer.

It will also be appreciated that instead of the tensioning means being carried on a carrier arm which is pivotally mounted about a pivot mounting, the tensioning means may be carried on any suitable carrier, for ex-

ample, the tensioning means may be mounted on a linearly moveable carrier, for example, a carrier moveable with rectilinear motion for urging the tensioning sprocket, pulley or skid into engagement with the endless drive transmission element also with rectilinear motion, and in which case the monitoring means may be provided by any suitable monitoring means, for example, a proximity sensor, a potentiometer, which would monitor the rectilinear movement of the carrier and in turn the rectilinear movement of the tensioning means from the datum position.

It will also be appreciated that while the datum position has been described as being a no-load datum position, determined when the baler is operating in a no-load state, any suitable datum position may be selected, which may be a no-load datum position, or a datum position spaced apart from the no-load position of the tensioning means.

In some embodiments of the invention, it is envisaged that the baler, or the combined baler/bale wrapper, as the case may be, may be provided as a self-propelled baler or a self-propelled baler/bale wrapper, and in which case, it is envisaged that the signal indicative of the optimum ground speed of the baler may be applied to a speed controller of the self-propelled baler or the self-propelled baler/bale wrapper for directly controlling the ground speed of the self-propelled baler or the self-propelled baler/bale wrapper at the optimum ground speed thereof.

While the method for determining the value of the quantity of material currently in the bale chamber has been described as being determined from a signal read from the angle sensor, the quantity of the material currently in the bale chamber may be determined from the value of the power currently being drawn by the bale rotating rollers.

While the pressing means of the baler has been described as being provided by bale rotating rollers which define the circumference of the bale chamber, or by one or more belts carried on rollers, which also define the bale chamber, the pressing means of the baler may be provided by any other suitable pressing means for pressing, rotating and forming a round bale.

While the means for determining the degree of elastic stretch in the main drive chain has been determined by the tensioning unit acting on the slack leg of the main drive chain, it is envisaged that in some embodiments of the invention the degree of elastic stretch in the main drive chain my be determined from any other suitable leg of the main drive chain, and in which case, a suitable detecting means would be provided cooperating with the relevant leg of the main drive chain for detecting the elastic stretch in the main drive chain.

It is also envisaged during operation of the balers according to the invention, the datum position of the tensioning means and the datum value of the signal produced by the angle sensor or other suitable monitoring means, may be recalibrated in order to take account of any stretch in the main drive chain resulting from wear of the main drive chain, and also resulting from wear in the driven sprocket and the first and second sprockets. Recalibrating the tensioning means and the signal produced by the angle sensor or other suitable sensor would be carried out as already described with the baler operating in a no-load state.

While the balers have been described as comprising a control means provided by microcontrollers, it will be readily apparent to those skilled in the art that the control means may be provided by any suitable type of signal processor, for example, a microprocessor or any other such signal processors.

It is envisaged that in some embodiments of the invention the memory of the microcontroller of the balers instead of being provided with equations (2), (3), (4) and (5) and the calibration values of the corresponding constants thereof for crop materials of three different ranges of moisture content, in some embodiments of the invention equations (2) to (5) and the calibration values of the corresponding constants thereof may be provided for crop materials of a single range of moisture contents, for example, the equations (2) to (5) and the calibration values of the corresponding constants thereof may be provided for only crop material of moisture content of 60% and greater, or alternatively, for crop materials of moisture content in the range of approximately 40% to approximately 60%, or for crop materials within the moisture content range of 20% or less. In other embodiments of the invention the equations (2) to (5) and the calibration values of the corresponding constants thereof may be provided for crop materials of two ranges of moisture content. In other embodiments of the invention it is envisaged that the equations (2) to (5) and the calibration values of the corresponding constants thereof may be provided for only one specific crop material, for example, grass silage, and in other embodiments of the invention the equations (2) to (5) and the calibration values of the corresponding constants thereof may be provided for a number of specific crop materials, for example, grass silage, haylage and wheat straw.

Additionally, while three values of $\Delta Q_0$ have been provided for each type of crop material, it is envisaged that in some embodiments of the invention only a single value of $\Delta Q_0$ may be provided for each type of crop material. In other embodiments of the invention two or more than two values of $\Delta Q_0$ may be provided for each type of crop material.

It will be appreciated that while in the embodiments of the balers described, three threshold values have been described, namely, a first threshold value, a second threshold value and a third threshold value, against which each determined power value is compared. In some embodiments of the invention it is envisaged that only one threshold value may be provided, and in other embodiments of the invention only two threshold values may be provided. Typically, in cases where only one threshold value is provided, the threshold value would be of a value similar to the third threshold value, and similarly, in cases where only two threshold values are provided, the value of the second threshold value would be similar to the third threshold value described with reference to the embodiments of the balers. In other embodiments of the invention more than three threshold values may be provided.

It is also envisaged that in some embodiments of the invention the values of each threshold value, instead of being of a power value, the threshold values could be of values corresponding to the relevant corresponding values read from the angle sensor. In which case, the values read from the angle sensor would be compared directly with the stored values of the relevant first, second or third threshold values.

While the embodiments of the balers which have been described with reference to the drawings have been described for baling crop material, it is envisaged that in some embodiments of the invention the balers according to the invention may be configured for baling other types of material besides crop material, and in which case, appropriate equations would be provided together with appropriate calibration values of constants for the relevant equations for the material or materials to be baled, and the relevant equations and the calibration values of the constants therefore would be determined in a similar manner to that described from a corresponding standard baler.

**Claims**

1. A method for determining a value of power being drawn by a pressing means (10, 122, 17) of a baler (2, 121), the pressing means (10, 122, 17) being adapted to rotate, press and form material into a round bale, **characterised in that** the method comprises:

    monitoring a value of a characteristic indicative of tension in an endless drive transmission element (53) through which power is being drawn by the pressing means (10,122, 17) to rotate the material therein, and, determining the value of the power being drawn by the pressing means (10, 122, 17) to rotate the material therein as a function of the value of the monitored characteristic indicative of the tension in the endless drive transmission element (53).

2. A method as claimed in Claim 1 **characterised in that** the monitoring of the value of the characteristic indicative of the tension in the endless drive transmission element (53) through which power is being drawn by the pressing means (10, 122, 17)to rotate the material therein comprises monitoring a value indicative of the elastic stretch in the endless drive transmission element (53).

3. A method as claimed in Claim 1 or 2 **characterised in that** the characteristic indicative of the tension in the endless drive transmission element (53) is monitored by monitoring a value indicative of displacement of a tensioning means (79, 80, 83, 133) from a datum position thereof, the tensioning means (79, 80, 83, 133) being engageable with the endless drive transmission element (53) for tensioning thereof.

4. A method as claimed in any preceding claim **characterised in that** the value of the power being drawn by the pressing means (10, 122, 17) to rotate the material therein is determined from an equation representing the relationship between the value of power being drawn by the pressing means (10, 122, 17) to rotate the material therein, and the value of the monitored characteristic indicative of the value of the tension in the endless drive transmission element (53).

5. A method as claimed in any preceding claims further comprising comparing either the determined value of the power being drawn by the pressing means (10, 122, 17) to rotate the material therein or the value of the monitored characteristic indicative of the tension in the endless drive transmission element (53) with a corresponding first threshold value of power or the monitored first characteristic, and if the determined value of the power, or the value of the monitored characteristic exceeds the corresponding first threshold value thereof, a first time period is timed from the time the corresponding first threshold value is exceeded until the value of the determined power or the value of the monitored characteristic indicative of the tension in the endless drive transmission element ceases to exceed the corresponding first threshold value thereof, and the time value of each first time period is time and date stamped and stored in memory, and preferably, the time values of the first time periods are cumulatively summed and stored in memory

6. A method for determining the quantity of material in a pressing means (10,122,17) of a baler (2,121), the pressing means (10, 122, 17) being adapted to rotate, press and form the material into a round bale, **characterised in that** the method comprises:

    determining the value of the power being drawn by the pressing means (10, 122, 17) to rotate the material therein as claimed in any preceding claim, or the value of a characteristic indicative of tension in an endless drive transmission element (53) through which power is being drawn by the pressing means (10, 122, 17) to rotate the material therein, and

determining the quantity of material in the pressing means (10, 122, 17) as a function of the determined value of the power being drawn by the pressing means (10, 122, 17) to rotate the material therein, or the determined value of the characteristic indicative of the tension in the endless drive transmission element (53) through which power is being drawn by the pressing means (10, 122, 17) to rotate the material therein.

**7.** A method as claimed in Claim 6 **characterised in that** the quantity of material in the pressing means (10, 122, 17) of the baler (2, 121) is determined from an equation representing the relationship between the quantity of material in the pressing means (10, 122, 17), and either the value of the power being drawn by the pressing means (10, 122, 17) to rotate the material therein or the value of the characteristic indicative of the tension in the endless drive transmission element (53) through which power is being drawn by the pressing means (10, 122, 17) to rotate the material therein.

**8.** A method as claimed in Claim 6 or 7 further comprising producing a signal indicative of the quantity of material in the pressing means (10, 122, 17), and advantageously, the signal indicative of the quantity of material in the pressing means is adapted for conversion to a human sensory perceptible signal.

**9.** A method for determining the optimum ground speed of a baler (2, 121) comprising a pressing means adapted to rotate, press and form material therein into a round bale, **characterised in that** the method comprises:

determining the value of power being drawn by the pressing means (10,122,17) to rotate the material therein as claimed in any of Claims 1 to 5, or a value of a characteristic indicative of tension in an endless drive transmission element (53) through which power is being drawn by the pressing means (10, 122, 17) to rotate the material therein,
determining the current rate at which the value of the power is increasing per unit time or the current rate at which the characteristic indicative of the tension in the endless drive transmission element (53) is increasing per unit time,
determining the current ground speed of the baler (2,121), and
determining the optimum ground speed of the baler as a function of the optimum rate at which the value of the power or in the value of the characteristic indicative of tension in the endless drive transmission element (53) should increase per unit time, the current rate of increase in the value of power or in the current rate of increase in value of the characteristic indicative of the tension in the endless drive transmission element (53) per unit time, and the current ground speed of the baler (2,121).

**10.** A baler comprising a pressing means (10, 122, 17) for rotating, pressing and forming material into a round bale, an endless drive transmission element (53) for transmitting power to the pressing means (10, 122, 17) to rotate the material therein to form the bale, **characterised in that** a monitoring means (79, 80, 83, 121, 105) is provided for monitoring a characteristic indicative of tension in the endless drive transmission element (53) and configured to produce a signal indicative of the value of the monitored characteristic, and a signal processor (112) programmed to read the value of the signal produced by the monitoring means (105) indicative of the monitored characteristic and programmed to determine the power being drawn by the pressing means (10, 122, 17) to rotate the material therein to form the bale as a function of the signal indicative of the value of the monitored characteristic read from the monitoring means (105).

**11.** A baler as claimed in Claim 10 **characterised in that** the monitoring means (79, 80, 83, 133, 105) is configured to monitor a characteristic of elastic stretch in the endless drive transmission element (53) as the characteristic indicative of the tension in the endless drive transmission element.

**12.** A baler as claimed in Claim 10 or 11 **characterised in that** a tensioning means (79, 80, 83, 133) is provided for tensioning the endless drive transmission element (53), and the monitoring means (105) is configured to monitor the displacement of the tensioning means (79,80,83,133) from a datum position thereof, as the tensioning means (79, 80, 83, 133) tensions the endless drive transmission element (53) as the characteristic indicative of the tension in the endless drive transmission element (53).

**13.** A baler as claimed in any of Claims 10 to 12 **characterised in that** the tensioning means (79, 80, 83, 133) is pivotally mounted about a pivot mounting (85, 89, 134, 137), and the monitoring means (105) is configured to monitor the angular displacement of the tensioning means (79, 80, 83, 133) about the pivot mounting (85, 89, 134, 137) from the datum position as the characteristic indicative of the tension in the endless drive transmission element (53).

**14.** A baler as claimed in any of Claims 10 to 13 **characterised in that** the signal processor (112) is programmed to compare either the determined value of the power being drawn by the pressing means (10,122,17) to rotate the material therein or the value of the monitored characteristic indicative of the tension in the endless drive transmission element (53) with a corresponding first threshold value, and if the determined value of the power or the value of the monitored characteristic exceed the corresponding first threshold value, the signal processor (112) is programmed to commence timing a first time period from the time the determined value of the power or the value of the monitored characteristic exceeds the corresponding first threshold value until the determined value of the power or the value of the monitored characteristic ceases to exceed the corresponding first threshold value, the signal processor (112) is programmed to time and date stamp the time value of each first time period and to store in memory the time value of each first time period in memory.

15. A baler as claimed in any of Claims 10 to 14 **characterised in that** the signal processor (112) is programmed to compute the quantity of material in the pressing means (10, 122, 17) as a function of either the determined value of the power being drawn by the pressing means (10,122,17) to rotate the material therein or the value of the monitored characteristic read from the monitoring means (105).

16. A baler as claimed in any of Claims 10 to 15 **characterised in that** the signal processor (112) is programmed to determine either the current rate at which the power being drawn by the pressing means (10, 122, 17) to rotate the material therein is increasing per unit time, or the current rate at which the characteristic indicative of tension in the endless drive transmission element (53) through which power is being drawn by the pressing means (10, 122, 17) is increasing per unit time, and to determine the current ground speed of the baler (2,121), and to determine the optimum ground speed of the baler (2, 121) as a function of the optimum rate at which the value of the power or the value of the characteristic indicative of tension in the endless drive transmission element (53) should increase per unit time, the current rate of increase in the value of power or in the value of the characteristic indicative of the tension in the endless drive transmission element (53) per unit time, and the current ground speed of the baler (2,121).

FIG 1

EP 4 388 864 A1

FIG 2

FIG 3

FIG 4

FIG 5

FIG 6

FIG 7

FIG 8

Fig 9

Fig 10

FIG 11

FIG 12

Angle Sensor — 105

Interface — 118

Microcontroller — 112

memory — 112a

Power Output Signal — 114

Quantity of Material Output Signal — 119

Optimum Ground Speed Signal — 120

Alert Signal — 113

Visual Display Unit — 115

Sounder — 116

Light — 117

FIG 13

EP 4 388 864 A1

Power

angular displacement

$F_{IG} 14$

Quantity of material

C

A

B

Angular displacement

$F_{IG} 15$

FIG. 16

FIG 17

Europäisches
Patentamt

European
Patent Office

Office européen
des brevets

# EUROPEAN SEARCH REPORT

**Application Number**

EP 23 21 8865

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/346324 A1 (CASADEI VALERIO [IT] ET AL) 3 November 2022 (2022-11-03) | 1,3-5, 10,12-14 | INV.<br>A01F15/07 |
| Y | * figures 4A, 6, 9 * | 2,11 | A01F15/08 |
| A | * paragraphs [0009], [0029], [0041], [0042], [0072], [0083] * | 6-9,15, 16 | F16H7/08<br>F16H7/12 |
| | ----- | | |
| Y | EP 1 877 684 B1 (DAYCO PRODUCTS LLC [US]) 18 August 2010 (2010-08-18)<br>* figures 2, 4, 6 *<br>* paragraph [0008] * | 2,11 | |
| | ----- | | |
| A | EP 3 146 833 B1 (CLAAS SELBSTFAHRENDE ERNTEMASCHINEN GMBH [DE]) 12 June 2019 (2019-06-12)<br>* figures 1, 2 *<br>* paragraphs [0021] – [0028], [0055], [0056] * | 1-16 | |
| | ----- | | |

**TECHNICAL FIELDS SEARCHED (IPC)**

A01F
F16H

The present search report has been drawn up for all claims

| Place of search | Date of completion of the search | Examiner |
|---|---|---|
| Munich | 17 April 2024 | Rahbauer, Sebastian |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
...........................................................
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

**EP 23 21 8865**

This annex lists the patent family members relating to the patent documents cited in the above-mentioned European search report.
The members are as contained in the European Patent Office EDP file on
The European Patent Office is in no way liable for these particulars which are merely given for the purpose of information.

**17-04-2024**

| Patent document cited in search report | | | Publication date | Patent family member(s) | | | Publication date |
|---|---|---|---|---|---|---|---|
| US 2022346324 | A1 | | 03-11-2022 | AU | 2021210223 | A1 | 02-12-2021 |
| | | | | CA | 3141038 | A1 | 29-07-2021 |
| | | | | EP | 4093180 | A1 | 30-11-2022 |
| | | | | IT | 202000000928 | A1 | 20-07-2021 |
| | | | | US | 2022346324 | A1 | 03-11-2022 |
| | | | | WO | 2021148946 | A1 | 29-07-2021 |
| EP 1877684 | B1 | | 18-08-2010 | AU | 2006240253 | A1 | 02-11-2006 |
| | | | | BR | PI0610538 | A2 | 29-06-2010 |
| | | | | CA | 2605627 | A1 | 02-11-2006 |
| | | | | CN | 101189450 | A | 28-05-2008 |
| | | | | EP | 1877684 | A2 | 16-01-2008 |
| | | | | ES | 2350747 | T3 | 26-01-2011 |
| | | | | JP | 4971308 | B2 | 11-07-2012 |
| | | | | JP | 2008537084 | A | 11-09-2008 |
| | | | | KR | 20070120186 | A | 21-12-2007 |
| | | | | US | 2006240922 | A1 | 26-10-2006 |
| | | | | WO | 2006115840 | A2 | 02-11-2006 |
| EP 3146833 | B1 | | 12-06-2019 | NONE | | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2002076183 A